(19) Europäisches Patentamt / European Patent Office / Office européen des brevets

(11) **EP 4 657 775 A1**

(12) **EUROPEAN PATENT APPLICATION**
published in accordance with Art. 153(4) EPC

(43) Date of publication:
03.12.2025 Bulletin 2025/49

(21) Application number: 23920670.9

(22) Date of filing: 09.06.2023

(51) International Patent Classification (IPC):
*H04B 17/309* (2015.01)

(52) Cooperative Patent Classification (CPC):
G06N 3/084; H04B 17/309; H04B 17/391;
H04W 12/033; H04W 40/22; H04W 76/14

(86) International application number:
PCT/CN2023/099329

(87) International publication number:
WO 2024/164473 (15.08.2024 Gazette 2024/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 09.02.2023 CN 202310116586

(71) Applicant: Sony Group Corporation
Tokyo 108-0075 (JP)

(72) Inventors:
• SUN, Chen
Beijing 100027 (CN)
• ZHENG, Ce
Beijing 100027 (CN)

(74) Representative: D Young & Co LLP
3 Noble Street
London EC2V 7BQ (GB)

(54) **ELECTRONIC DEVICE AND METHOD FOR SPLIT LEARNING, AND ELECTRONIC DEVICE AND METHOD FOR MODEL SPLITTING**

(57) Provided in the present disclosure are an electronic device and method for split learning, an electronic device and method for model splitting of a neural network model, and a computer readable storage medium. The electronic device for split learning comprises a processing circuit, configured to: according to the channel state of a sidelink-related link between users, determining one or more of the following: learning users participating in the split learning, the participation sequence of the learning users, and a communication link used for client model transmission between each learning user and a downstream learning user; and on the basis of the determination, generating split information for the learning users.

Figure 4

**Description**

This application claims priority to Chinese Patent Application No. 202310116586.7 titled "ELECTRONIC DEVICE AND METHOD FOR SPLIT LEARNING, AND COMPUTER READABLE STORAGE MEDIUM", filed on February 09, 2023 with the China National Intellectual Property Administration (CNIPA), which is incorporated herein by reference in its entirety.

**FIELD**

This application relates to the technical field of split learning and model split, and in particular to a wireless communication technology related to split learning (SL) and model split. More specifically, the present disclosure relates to an electronic device and a method for split learning, an electronic device and a method for model split, and a computer-readable storage medium.

**BACKGROUND**

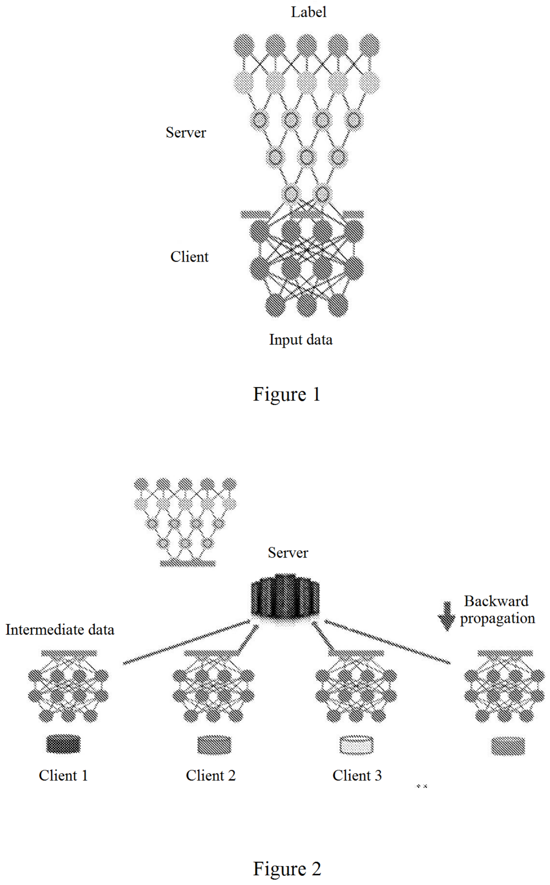

Split learning of a neural network model may be performed in consideration of factors such as computing power, a storage capacity, and privacy. Figure 1 shows a schematic diagram of a basic principle and a network structure for split learning. As shown in the figure, a neural network model is divided into two parts, namely a front layer(s) of model disposed at a client (referred to as a client model) and a back layer(s) of model disposed at a server (referred to as a server model).

A training process of the neural network model may include two steps: a first step of establishing a model topology; and a second step of model training. In the first step, the neural network model is divided into a client model and a server model, as shown in Figure 1, and training parameters of the two parts of models are randomly initialized. In the second step, the client performs forward propagation calculation on a local model based on local data, and transmits a local label (Label) and intermediate data (for example, an output tensor of a split layer) calculated through the forward propagation (FP) to the server; the server continues the forward propagation calculation after obtaining the intermediate data, and performs backward gradient calculation based on the uploaded label to obtain a gradient corresponding to the server model; the server transmits the gradient of the split layer back to the client, and the client continues backward propagation (BP) calculation to obtain a corresponding gradient; and the client and the server update the model parameter according to the gradients obtained respectively. The above operations are repeated until the model converges.

It should be noted that split learning may be performed between a single client and a server, or may be performed among multiple clients and a server. Figure 2 shows a schematic diagram of split learning among multiple clients and a server.

For example, the server first establishes a connection with client 1, and client 1 performs split learning for one or more times with the server based on local data to update model parameters of the client model and the server model; then the server establishes a connection with client 2, and meanwhile client 2 needs to obtain the model parameters trained by client 1 to locally update a client model; client 2 performs split learning for one or more times with the server based on local data to update the model parameters of the client model and the server model; and updating of the model parameters of the other clients is performed in a similar manner, until the model converges.

In the split learning in the multi-client scenario shown in Figure 2, training requires use of local data from multiple clients. When a latter client (also referred to as a downstream client) performs training, the latter client needs to obtain model parameters of a previous client (also referred to as an upstream client). The model parameters may be obtained through a central mode or a peer-to-peer (P2P) mode, for example.

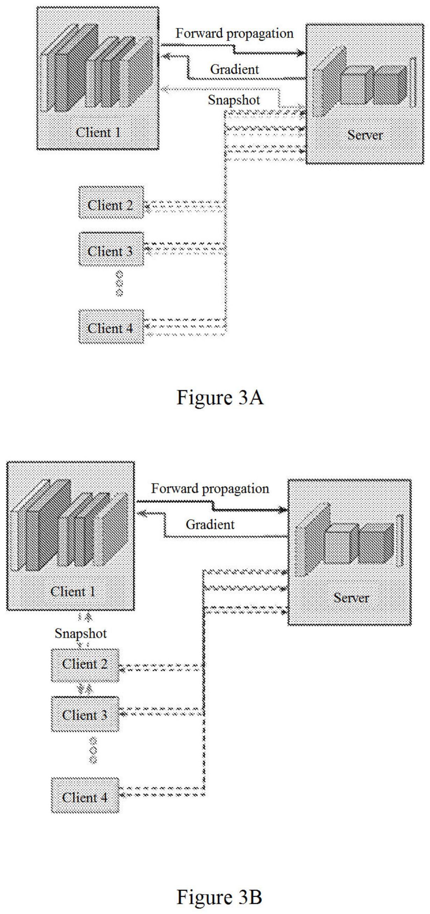

Figure 3A shows a schematic diagram of a network topology structure of split learning in a central mode, and Figure 3B shows a schematic diagram of a network topology structure of split learning in a P2P mode, where the snapshot includes client model parameters at that time. As can be seen in Figure 3A, client 1 uploads model parameters to the server, and the server transmits the model parameters to client 2 after establishing a connection with client 2. In Figure 3B, a connection is directly established between client 1 and client 2, and client 1 directly transmits the model parameters to client 2.

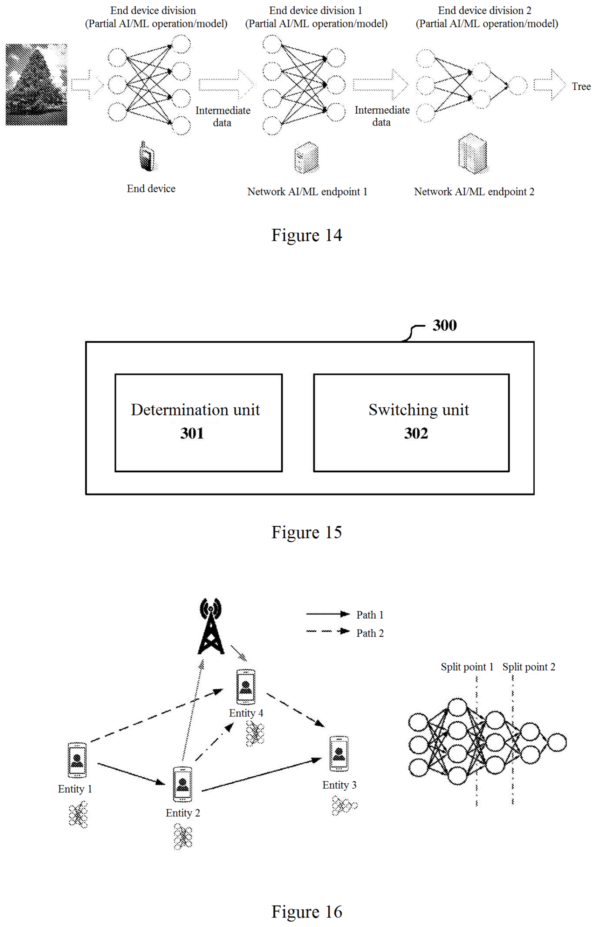

Furthermore, a complete neural network model may be split into multiple parts, and the respective parts are executed by different entities (hereinafter also referred to as split entities), so that the neural network model is executed on multiple split entities in a distributed manner. Figure 14 shows a schematic example of model split. In the Figure, end devices and network artificial intelligence/machine learning (AI/ML) endpoints 1 and 2 represent split entities. The split entities execute respective end device divisions, that is, corresponding partial AI/ML models (neural network models), respectively. The end device may be user equipment (UE). The user inputs a to-be-recognized image on the end device. The end device executes a first part of the AI/ML model to obtain the intermediate data, and passes the intermediate data to the network AI/ML endpoint 1. The network AI/ML endpoint 1 executes a corresponding part of the AI/ML model to obtain the intermediate data, and passes the intermediate data to the network AI/ML endpoint 2. The network AI/ML endpoint 2 executes its corresponding part of the AI/ML model to obtain a recognition result.

**SUMMARY**

In the following, an overview of the present disclosure is given simply to provide basic understanding to some aspects of the present disclosure. It should be understood that this overview is not an exhaustive overview of the present disclosure. It is not intended to determine a critical part or an important part of the present disclosure, nor to limit the scope of the present disclosure. An object of the overview is only to give some concepts in a simplified manner, which serves as a preface of a more detailed description described later.

According to an aspect of the present disclosure, an electronic device for split learning is provided. The electronic device includes processing circuitry, configured to: determine, based on a channel state of a link between users which is related to a sidelink, one or more of the following: learning users participating in the split learning, a participation order for the learning users, and a communication link between each of the learning users and a downstream learning user thereof for client model transferring; and generate split information for the learning users based on the determining.

According to another aspect of the present disclosure, a method for split learning is provided. The method includes: determining, based on a channel state of a link between users which is related to a sidelink, one or more of the following: learning users participating in the split learning, a participation order for the learning users, and a communication link between each of the learning users and a downstream learning user thereof for client model transferring; and generating split information for the learning users based on the determining.

According to an aspect of the present disclosure, an electronic device for split learning is provided. The electronic device includes processing circuitry, configured to: receive split information for split learning from a base station, where the split information is generated by the base station based on the following determining: the base station determines, based on a channel state of a link between users which is related to a sidelink, one or more of learning users participating in the split learning, a participation order for the learning users, and a communication link between each of the learning users and a downstream learning user thereof for client model transferring; and perform the split learning based on the split information.

According to another aspect of the present disclosure, a method for split learning is provided. The method includes: receiving split information for split learning from a base station, where the split information is generated by the base station based on the following determining: the base station determines, based on a channel state of a link between users which is related to a sidelink, one or more of learning users participating in the split learning, a participation order for the learning users, and a communication link between each of the learning users and a downstream learning user thereof for client model transferring; and performing the split learning based on the split information.

With the electronic device and method according to the above aspects of the present disclosure, a specific implementation of the split learning is determined based on a channel state of the link between users which is related to the sidelink, so that privacy and data security can be effectively protected.

According to an aspect of the present disclosure, an electronic device for model split of a neural network model is provided. The electronic device includes processing circuitry, configured to: determine a current path for the model split based on a calculating state and a communication state of entities, where the current path includes: a split point of the neural network model, split entities which participate in the model split to execute a part of respective parts of the neural network model corresponding to the split point, and a participation order of the split entities; and determine, when path switching is to be performed, a target path as a path to which the model split is to be switched, such that the model transferring between the current path and the target path is preferentially carried out through a sidelink.

According to another aspect of the present disclosure, a method for model split of a neural network model is provided. The method includes: determining a current path for the model split based on a calculating state and a communication state of entities, where the current path includes: a split point of the neural network model, split entities which participate in the model split to execute a part of respective parts of the neural network model corresponding to the split point, and a participation order of the split entities; and determining, when path switching is to be performed, a target path as a path to which the model split is to be switched, such that the model transferring between the current path and the target path is preferentially carried out through a sidelink.

With the electronic device and method according to the above aspects of the present disclosure, a new path capable of performing model transferring through a sidelink is preferentially selected when performing path switching, so that uplink and downlink resources are saved, an overhead for model transferring is reduced, and a transferring efficiency is improved.

According to other aspects of the present disclosure, computer program codes and a computer program product for implementing the above-described method for split learning and method for model split, and a computer-readable storage medium having the computer program codes for implementing the method for split learning and method for model split stored thereon, are further provided.

These and other advantages of the present disclosure will be more apparent from the following detailed description of preferred embodiments of the present disclosure in conjunction with the accompanying drawings.

## BRIEF DESCRIPTION OF THE DRAWINGS

To further set forth the above and other advantages and features of the present disclosure, detailed description will be made in the following taken in conjunction with accompanying drawings in which identical or like reference signs designate identical or like components. The accompanying drawings, together with the detailed description below, are incorporated into and form a part of the specification. It should be noted that the accompanying drawings only illustrate, by way of example, typical embodiments of the present disclosure and should not be construed as a limitation to the scope of the disclosure. In the accompanying drawings:

Figure 1 shows a schematic diagram of a basic principle and network structure for split learning;

Figure 2 shows a schematic diagram of split learning among multiple clients and a server;

Figure 3A shows a schematic diagram of a network topology structure of split learning in a central mode;

Figure 3B shows a schematic diagram of a network topology structure of split learning in a P2P mode;

Figure 4 is a block diagram illustrating functional modules of an electronic device for split learning according to an embodiment of the present disclosure;

Figure 5 is a block diagram illustrating functional modules of an electronic device for split learning according to an embodiment of the present disclosure;

Figure 6 shows an example of model transferring between users in a first scenario;

Figure 7 shows an example of model transferring between users in a second scenario;

Figure 8 shows an example of a possible situation of selecting a participation order randomly in the case of same learning users;

Figure 9 shows another example of model transferring between users in a second scenario;

Figure 10 shows an example of a possible situation of selecting a participation order randomly in the case of same learning users;

Figure 11 shows an example of model transferring between users in a third scenario;

Figure 12 shows an example of a possible situation of selecting learning users and an execution order randomly;

Figure 13 is a block diagram illustrating functional modules of an electronic device for split learning according to another embodiment of the present disclosure;

Figure 14 shows a schematic example of model split;

Figure 15 is a block diagram illustrating functional modules of an electronic device for model split according to another embodiment of the present disclosure;

Figure 16 shows an example of path switching;

Figure 17 is a block diagram illustrating functional modules of an electronic device for model split according to another embodiment of the present disclosure;

Figure 18 shows another example of path switching;

Figure 19 shows another example of path switching;

Figure 20 shows another example of path switching;

Figure 21 shows a schematic diagram of a 3GPP network model;

Figure 22 shows a flow chart of a method for split learning according to an embodiment of the present disclosure;

Figure 23 shows a flow chart of a method for split learning according to another embodiment of the present disclosure;

Figure 24 shows a flow chart of a method for model split according to another embodiment of the present disclosure;

Figure 25 is a block diagram showing an example of a schematic configuration of a server;

Figure 26 is a block diagram showing a first example of a schematic configuration of an eNB or gNB to which the technology of the present disclosure is applicable;

Figure 27 is a block diagram showing a second example of a schematic configuration of an eNB or gNB to which the technology of the present disclosure is applicable;

Figure 28 is a block diagram showing an example of a schematic configuration of a smartphone to which the technology of the present disclosure may be applied;

Figure 29 is a block diagram showing an example of a schematic configuration of an car navigation apparatus to which the technology of the present disclosure may be applied; and

Figure 30 is a block diagram of an exemplary block diagram illustrating the structure of a general purpose personal computer capable of realizing the method and/or device and/or system according to the embodiments of the present disclosure.

**DETAILED DESCRIPTION**

An exemplary embodiment of the present disclosure will be described hereinafter in conjunction with the accompanying drawings. For the purpose of conciseness and clarity, not all features of an embodiment are described in this specification. However, it should be understood that multiple decisions specific to the embodiment have to be made in a process of developing any such embodiment to realize a particular object of a developer, for example, conforming to those constraints related to a system and a service, and these constraints may change as the embodiments differs. Furthermore, it should also be understood that although the development work may be very complicated and time-consuming, for those skilled in the art benefiting from the present disclosure, such development work is only a routine task.

Here, it should also be noted that in order to avoid obscuring the present disclosure due to unnecessary details, only a device structure and/or processing steps closely related to the solution according to the present disclosure are illustrated in the accompanying drawing, and other details having little relationship to the present disclosure are omitted.

<First Embodiment>

As mentioned previously, during the split learning process, there is information interaction of intermediate data and a client model. When the intermediate data and the client model or a label and the complete model are obtained by the same attacker, the attacker may reversely deduce original data of the client based on the intermediate data and the client model or the label and the complete model, causing a risk of privacy leakage. Therefore, in order to reduce the risk, during the split learning process, the intermediate data and the client model should be located in different locations to the greatest extent. For example, in Figure 3A, a server may obtain a client model and intermediate data of Client 1, and therefore may reversely deduce original data of Client 1, causing a risk of privacy leakage. In Figure 3B, a there is merely intermediate data at the server, without the client model of Client 1, and therefore the risk of privacy leakage is effectively reduced.

In the following description, the client is also referred to as a user, which includes, for example, various user equipment (UE), and the server may be located on a base station side or a network side, for example.

In the embodiment, in order to effectively protect privacy and data security, a technology for determining a split learning strategy based on a channel state of a link between users which is related to a sidelink is provided.

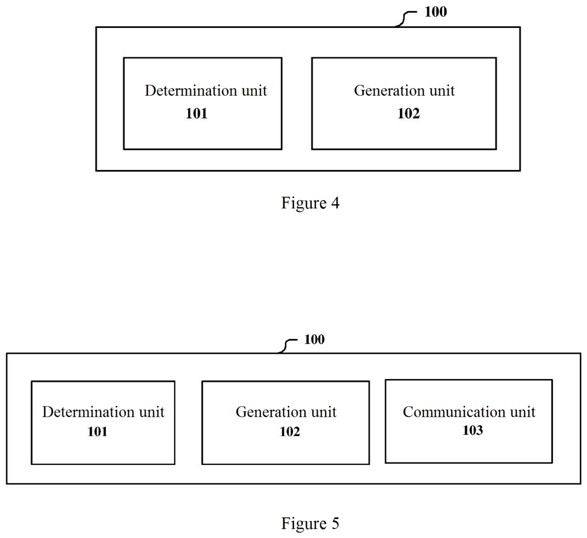

Figure 4 is a block diagram illustrating functional modules of an electronic device 100 for split learning according to an embodiment of the present disclosure. As shown in Figure 4, the electronic device 100 includes: a determination unit 101, configured to determine, based on a channel state of a link between users which is related to a sidelink, one or more of the following: learning users participating in the split learning, a participation order for the learning users, and a communication link between each of the learning users and a downstream learning user thereof for client model transferring; and a generation unit 102, configured to generate split information for the learning users based on the determining.

The electronic device 100 may be arranged on a network side or a cloud server side, for example, may be arranged on a wireless transceiving node side. A wireless transceiving node here may be a base station, an access point (AP), a roadside unit, or the like. In addition, the user here may be various user equipment or user terminals capable of participating in split learning, or may be a communication terminal such as a mobile base station.

The determination unit 101 and the generation unit 102 may be implemented by one or more processing circuitries. The processing circuitry may be implemented as a chip or a processor, for example. Furthermore, it should be understood that various functional units in the electronic device shown in Figure 4 are only logical modules divided based on specific functions thereof, and are not intended to limit a specific implementation.

It should be noted that the electronic device 100 may be implemented at a chip level or at a device level. For example, the electronic device 100 may operate as the base station itself and may further include external devices such as a memory, a transceiver (not shown). The memory may be used to store related data information and programs that the base station needs to execute to achieve various functions. The transceiver may include one or more communication interfaces to support communications with different devices (such as another base station, UE, and the like). An implementation of the transceiver is not specifically limited here. Furthermore, the electronic device 100 may operate as a server.

The channel state includes, for example, whether there is a link which is related to the sidelink and a link quality of the link which is related to the sidelink. The link quality mentioned here may include the reference signal receiving power, a signal to interference and noise ratio, breakoff probability, transmission time, and the like, of the link, but this is not restrictive.

The link between users which is related to the sidelink may include one or more of: a direct sidelink, a sidelink relay, and a sidelink relay chain. Specifically, a direct sidelink refers to two users communicating directly through the sidelink, a sidelink relay refers to two users communicating through the sidelink via a third user (relay), and a sidelink relay chain refers to two users communicating through the sidelink via multiple other users (multiple relays). As mentioned previously, the user may not transmit information related to the client model to the base station when communicating using the sidelink, and therefore the risk of privacy leakage is reduced.

In an example, the determination unit 101 may be configured to perform the determining based on one or more of the following principles: it is necessary or preferential to perform the client model transferring through a direct sidelink; it is necessary or preferential to avoid performing the client model transferring through an uplink and downlink between the user and a base station; minimizing a total sum of time for the client model transferring throughout the whole procedure of the split learning; and minimizing an overall probability of breaking off of a link for the client model transferring throughout the whole procedure of the split learning. The time for transferring, the breakoff probability, and the like, of the link mentioned here may be calculated by the base station or the user based on the reference signal receiving power, the emitting power or the like.

The determination unit 101 may perform the determination based on knowledge of graph theory, for example. For example, each user may be abstracted as a point, and a link between users may be abstracted as an edge. Specifically, the direct sidelink, the sidelink relay, the sidelink relay chain, and the link forwarded via an uplink and downlink between the user and the base station may be regarded as four edges between the respective users. The time for client model transferring of each link or the link breakoff probability is used as a weight of each edge.

The channel state of the link related to the sidelink between the user and another user used by the determination unit 101 as the basis is a kind of user information, which may be reported to the electronic device 100 by the user, for example.

In addition, the determination unit 101 may be configured to perform the determination based on other user information. The other user information includes, for example, one or more of the following: amount of data, calculating capability, amount of electricity, storage capability, transmission power, a channel state of an uplink and a downlink between the user and a base station, location information and user consent information, of the user. In this way, performance of split learning can be further ensured.

For example, location information of a user may be used to indicate the Area of Interest (AoI) that the user has visited, and thus be used to measure diversity of data among users.

For example, the user consent information includes one or more of the following: a trust level of the user for other users, and whether the user agrees to perform the client model transferring through the uplink and downlink between the user and the base station. The trust level of the user for the other users includes to which of the other users the user agrees to transmit a client model of the user itself.

In addition, the trust level of the user for other users further includes one or more of the following: to which of the other users the user agrees to transmit the client model of the user itself through the uplink and downlink; to which of the other users the user agrees to transmit the client model of the user itself through which sidelink relays; and to which of the other users the user agrees to transmit the client model of the user itself through which sidelink relay chains. In other words, the user consent information indicates whether the user agrees to select a base station, a sidelink relay, or a sidelink relay chain to expose the client model of the user itself and an allowed extent of the exposure. By performing determination based on the user consent information, the determination unit 101 can take a privacy requirement of the user into consideration to the greatest extent possible.

As shown in Figure 5, the electronic device 100 may further include a communication unit 103, which is configured to acquire user information from the user, that is, a channel state of a link between the user and another user which is related to the sidelink and the other user information. It should be noted that this is not restrictive, and a part of the user information may be appropriately acquired by the base station through other manners.

In addition, although not shown in the drawing, the electronic device 100 may further include a learning unit configured to perform split learning on a base station side. In particular, the communication unit 103 may obtain intermediate data from the learning user; and the learning unit performs forward propagation calculation based on the intermediate data, performs backward gradient calculation according to a label provided by the learning user to obtain a gradient corresponding to the server model for updating model parameters, and reversely transmits the gradient of the split layer back to the learning user via the communication unit 103. The learning user proceeds with the backward propagation calculation based on the gradient to obtain a corresponding gradient and update the model parameter. The process repeats until the model converges.

Operations of the determination unit 101 are described below with respect to three scenarios respectively.

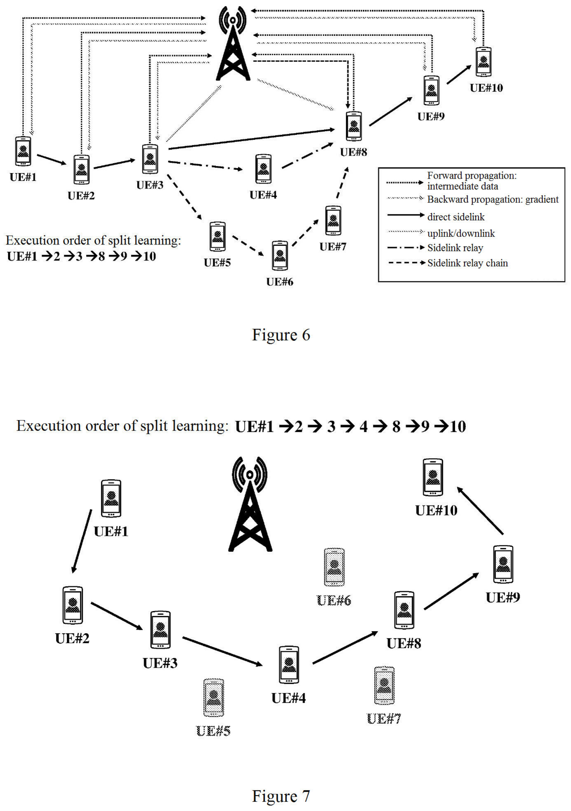

In a first scenario, learning users participating in the split learning are given and an order in which these learning users participate in the split learning is also given. In this case, the determination unit 101 only needs to determine a communication link between each of the learning users and a downstream learning user thereof for client model transferring. Figure 6 shows an example of model transferring between users in a first scenario.

In the example, the learning users and the order in which the learning users perform training are given. For example, the order is UE#1→ UE#2→ UE#3→ UE#8→ UE#9→UE#10. The determination unit 101 determines a communication link for client model transferring between each of UE#1, UE#2, UE#3, UE#8, UE#9 and UE#10 and a downstream UE thereof.

Taking UE#3 as an example, the model transferring manner between UE#3 and the downstream UE (UE#8) may be one or more of the following: UE#3 and UE#8 are directly connected via sidelink, that is, UE#3 transmits the client model directly to UE#8 via the sidelink, as shown by a black solid directed line segment in Figure 6 (a first path); UE#3 and UE#8 are connected via a base station, that is, UE#3 first transmits the client model to the base station via an uplink, and then the base station transmits the client model to UE#8 via a downlink, as shown by a gray solid directed line segment in the figure (a second path); UE#3 and UE#8 are connected via a single relay device (UE#4), that is, UE#3 transmits the client model to UE#4, and then UE#4 transmits the client model to UE#8, as shown by a black dot-dash directed line segment in the figure (a third path); and UE#3 and UE#8 are connected via a sidelink relay chain formed by multiple relay devices, that is, UE#3 transmits the client model to UE#8 via the sidelink relay chain (UE#5→ UE#6→ UE#7), as shown by a black dashed directed line in the figure (a fourth path). It should be noted that the sidelink relay and the sidelink relay chain in the latter two manners may not be unique.

The determination unit 101 may, for example, select one path from the four paths shown in Figure 6 for client model transferring, according to one or more of the principles described above, and based on various user information of UE#3 such as user consent information, transmission time, and channel quality.

For example, the four paths between UE#3 and UE#8 are represented as $L_1^{(3,8)}$, $L_2^{(3,8)}$, $L_3^{(3,8)}$, and $L_4^{(3,8)}$ respectively. The lengths of the paths are defined as $l_1^{(3,8)}$, $l_2^{(3,8)}$, $l_3^{(3,8)}$, and $l_4^{(3,8)}$, respectively, where $l_i^{(3,8)}$ may refer to transmission time of a client model on path $L_i^{(3,8)}$ (i=1~4), or an breakoff probability of path $L_i^{(3,8)}$, or the like. The determination unit 101 may select a path having the smallest $l_i^{(3,8)}$, that is, $i^* = \min_i l_i^{(3,8)}$, based on the principle of minimizing a total sum of time for the client model transferring throughout the whole procedure of the split learning or the principle of minimizing an overall probability of breaking off of a link for the client model transferring throughout the whole procedure of the split learning. Here, in consideration of privacy and security, the length of an untrusted path may be set to ∞. For example, in a case that the user consent information indicates that UE#3 does not agree to perform client model transferring through the uplink and downlink, the length $l_2^{(3,8)}$ of the second path $L_2^{(3,8)}$ may be set to ∞.

In addition, assuming the principle serving as the basis is that it is necessary or preferential to perform the client model transferring through a direct sidelink, the determination unit 101 may select the first path for client model transferring. It should be noted that these are exemplary rather than restrictive.

In a second scenario, learning users participating in the split learning are given, while an order in which these learning users participate in the split learning, that is, an execution order of the split learning, is not given. In this case, the determination unit 101 needs to determine a participation order for the learning users and a communication link between each of the learning users and a downstream learning user thereof for client model transferring.

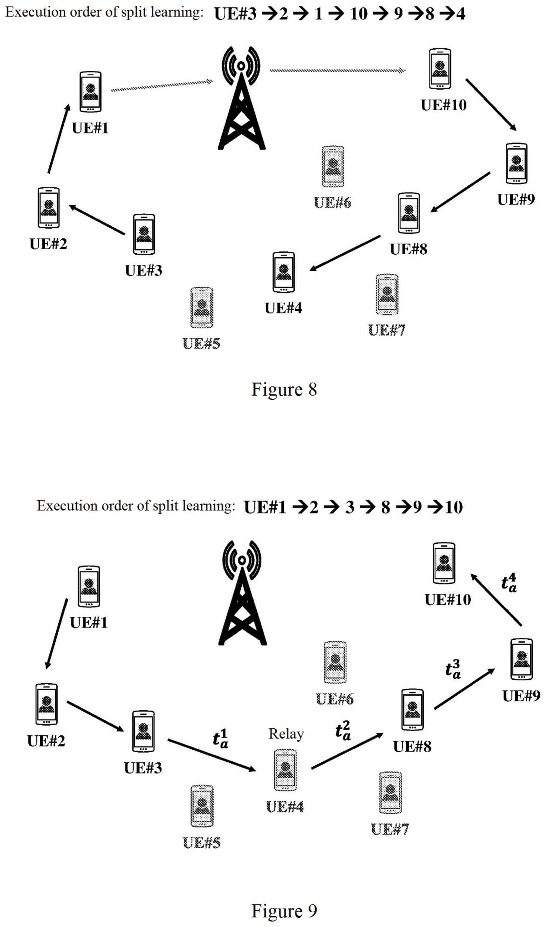

Figure 7 shows an example of model transferring between users in a second scenario. In the example, learning users participating in split learning are UE#1, UE#2, UE#3, UE#4, UE#8, UE#9 and UE#10. For example, the determination unit 101 determines the participation order for the learning users based on the principle that it is necessary or preferential to perform the client model transferring through a direct sidelink, thereby determining to adopt the execution order as shown in Figure 7. In this way, there is no need to forward the client model through the base station throughout the whole procedure of the split learning, and therefore the user privacy is protected to the greatest extent. For comparison, Figure 8 shows an example of a possible situation occurring when determining a participation order randomly in the case of the same learning users. In Figure 8, a downstream learning user of UE#1 is UE#10, and UE#1 is far from UE#10. Therefore, there is no direct sidelink or the channel state of a direct sidelink cannot meet a condition for model transferring. In this case, the client model of UE#1 needs to be forwarded to UE#10 through the base station.

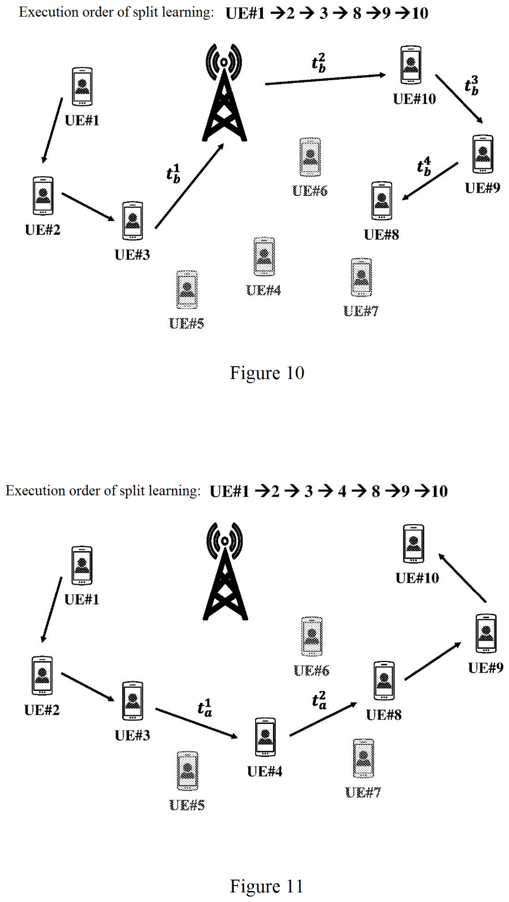

Figure 9 shows another example of model transferring between users in the second scenario. In the example, learning users participating in split learning are UE#1, UE#2, UE#3, UE#8, UE#9 and UE#10. For example, the determination unit 101 determines the participation order for the learning users based on the principle that it is necessary or preferential to avoid performing the client model transferring through an uplink and downlink, thereby determining to adopt the execution order as shown in Figure 9. Here, UE#3 to UE#8 perform client model transferring via UE#4 which serves as a sidelink relay. For comparison, Figure 10 shows an example of a possible situation occurring when determining a participation order randomly in the case of the same learning users. In Figure 10, a downstream learning user of UE#3 is UE#10, and UE#3 is far from UE#10. Therefore, there is no direct sidelink or the channel state of a direct sidelink cannot meet a condition for model transferring. In this case, the client model of UE#3 needs to be forwarded to UE#10 through the base station.

As another situation, for example, the determination unit 101 may determine the participation order for the learning users based on the principle of minimizing a total sum of time for the client model transferring throughout the whole procedure of the split learning. Figure 9 and Figure 10 show time required for each link to transfer a client model. Assuming there is

$$t_a^1 + t_a^2 + t_a^3 + t_a^4 > t_b^1 + t_b^2 + t_b^3 + t_b^4 \text{ , the}$$

determination unit 101 determines to adopt the execution order as shown in Figure 10.

In a third scenario, learning users participating in split learning are not given. Therefore, the determination unit 101 needs to determine the following three aspects: the learning users, a participation order for the learning users, and a communication link between each of the learning users and a downstream learning user thereof for client model transferring.

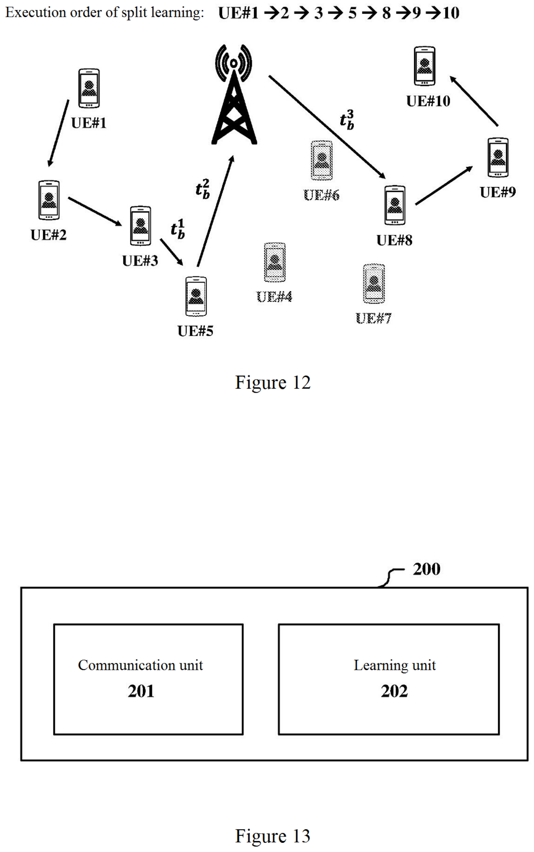

Figure 11 shows an example of model transferring between users in a third scenario. In the example, the selected learning users are UE#1, UE#2, UE#3, UE#4, UE#8, UE#9 and UE#10. For example, the determination unit 101 makes the above three aspects of determinations based on the principle that it is necessary or preferential to perform the client model transferring through a direct sidelink, thereby determining to adopt the learning users and the execution order as shown in Figure 11. It is assumed that both UE#4 and UE#5 meet other conditions such as amount of data, calculating power, and amount of electricity, but there is no direct sidelink between UE#5 and UE#8, UE#9 and UE#10. Therefore, the determination unit 101 selects UE#4. For comparison, Figure 12 shows an example of a possible situation occurring when determining learning users and an execution order randomly. In Figure 12, UE#5 is selected as a downstream learning user of UE#3. Since there is no direct sidelink between UE#5 and UE#8, UE#9 and UE#10, the client model of UE#5 needs to be forwarded to UE#8 through the base station.

As another situation, for example, the determination unit 101 may select the learning users and determine the participation order for the learning users based on the principle of minimizing a total sum of time for the client model transferring throughout the whole procedure of the split learning. Figure 11 and Figure 12 show time required for each segment of link to transfer a client model. Assuming that there is

$$t_a^1 + t_a^2 > t_b^1 + t_b^2 + t_b^3 \text{ , the determination unit}$$

101 determines to adopt the learning users and the execution order as shown in Figure 12.

It should be understood that the scenarios and examples described above are illustrative rather than restrictive, and operations of the determination unit 101 are not limited thereto.

In addition, the communication unit 103 is further configured to transmit the split information for each of the learning users to the learning user. For each of the learning users, the split information includes, for example, one or more of the following: a model split point or a corresponding client model, an upstream learning user and/or a downstream learning user of the learning user, configuration of a communication link for the client model transferring, and link resources allocated by a base station.

The configuration of the communication link for the client model transferring may include: which one of the direct sidelink, the sidelink relay, the sidelink relay chain and the uplink and downlink between the user and the base station is adopted. In a case of adopting one of the sidelink relay and the sidelink relay chain, the configuration further includes information on the used relay or relay chain.

After receiving the split information, the learning user executes the forward propagation algorithm of the client model according to the split information, and uploads obtained intermediate data to the base station. After obtaining the intermediate data, the base station continues to perform forward propagation calculation and performs backward gradient calculation based on the uploaded label to obtain a gradient corresponding to the server model, and then transmits the gradient of the split layer back to the learning user. The learning user receives the gradient returned by the base station and performs the backward propagation algorithm of the client model to update the client model. In addition, the learning user further receives a client model of an upstream learning user thereof from the upstream learning user according to the split information, and transfers the local client model to a downstream learning user of the learning user according to a communication link in the split information.

In summary, with the electronic device 100 according to the embodiment of the present disclosure, a specific implementation of split learning is determined based on a channel state of the link related to the sidelink between users, so that privacy and data security can be effectively protected. In addition, the electronic device 100 according to the embodiment further determines a specific implementation of split learning based on user consent information and other user information, so that user privacy and data security can be protected as much as possible while ensuring the performance of the split learning.

<Second Embodiment>

Figure 13 is a block diagram illustrating functional modules of an electronic device 200 for split learning according to another embodiment of the present disclosure. As shown in Figure 13, the electronic device 200 includes: a communication unit 201 and a learning unit 202. The communication unit 201 is configured to receive split information for split learning from a base station, where the split information is generated by the base station based on the following determining: the base station determines, based on a channel state of a link between users which is related to a sidelink, one or more of learning users participating in the split learning, a participation order for the learning users, and a communication link between each of the learning users and a downstream learning user thereof for client model transferring. The learning unit 202 is configured to perform the split learning based on the split information.

The communication unit 201 and the learning unit 202 may be implemented by one or more processing circuitries. The processing circuitry may be implemented as a chip or a processor, for example. It should be understood that various functional units in the electronic device shown in Figure 13 are only logical modules determined based on specific functions thereof, and are not intended to limit a specific implementation.

The electronic device 200 is located on the learning user side, for example, is provided on the wireless communication terminal side or is communicably connected to the wireless communication terminal. The wireless communication terminal here may be various UE or user terminals capable of participating in the split learning, or may be a communication terminal such as a mobile base station.

The electronic device 200 may be implemented at a chip level or at a device level. For example, the electronic device 200 may operate as the wireless communication terminal itself and may further include external devices such as a memory, and a transceiver (not shown). The memory may store related data information and program that the wireless communication terminal needs to execute to achieve various functions. The transceiver may include one or more communication interfaces to support communications with different devices (such as another wireless communication terminal, a base station, a core network, and the like). An implementation of the transceiver is not specifically limited here.

For example, the split information includes one or more of the following: a model split point or a corresponding client model, an upstream learning user and/or a downstream learning user of the learning user, configuration of a communication link for the client model transferring, and link resources allocated by a base station.

The configuration of the communication link for the client model transferring may include: which one of the direct sidelink, the sidelink relay, the sidelink relay chain and the uplink and downlink between the user and the base station is adopted. In a case of adopting one of the sidelink relay and the sidelink relay chain, the configuration further includes information on the used relay or relay chain.

The communication unit 201 is further configured to receive a client model of an upstream learning user from the upstream learning user based on the split information, and transmit the client model of the present learning user to the downstream learning user through the communication link for the client model transferring indicated in the split information. The learning unit 202 executes the FP algorithm of the client model based on the split information, uploads the obtained intermediate data to the base station, receives the gradient returned by the base station, and performs the BP algorithm of the client model to update the client model.

Similar to the first embodiment, the channel state includes whether there is the link which is related to the sidelink and a link quality of the link which is related to the sidelink. For example, the link between users which is related to the sidelink includes one or more of a direct sidelink, a sidelink relay and a sidelink relay chain. For example, the link quality includes, but is not limited to, a reference signal receiving power, a signal to interference and noise ratio, a breakoff probability, a transmission time, and the like, of the link.

The base station determines, based on a channel state of a link between users which is related to a sidelink, one or more of learning users, a participation order for the learning users, and a communication link for client model transferring. In addition, the base station performs the determining further based on other user information. Details thereof are already described in the first embodiment and are not repeated here.

Accordingly, the communication unit 201 is further configured to transmit, to the base station, user information of a user corresponding to the electronic device 200. For example, the user information includes a channel state of a link which is related to the sidelink between the user and another user. The user information may further include other user information. The other user information includes, for example, one or more of the following: amount of data, calculating capability, amount of electricity, storage capability, transmission power, a channel state of an uplink and a downlink between the user and a base station, location information and user consent information, of the user. Use of such user information can further ensure the performance of split learning.

For example, location information of a user may be used to indicate the Area of Interest (AoI) that the user has visited, and thus be used to measure diversity of data among users.

The user consent information includes, for example, one or more of the following: a trust level of the user for other users, and whether the user agrees to perform the client model transferring through the uplink and downlink between the user and the base station. The trust level of the user for other users includes to which of the other users the user agrees to transmit a client model of the user itself.

In addition, the trust level of the user for other users further includes one or more of the following: to which of the other users the user agrees to transmit the client model of the user itself through the uplink and downlink; to which of the other users the user agrees to transmit the client model of the user itself through which sidelink relays; and to which of the other users the user agrees to transmit the client model of the user itself through which sidelink relay chains. In other words, the user consent information indicates whether the user agrees to select a base station, a relay, or a relay chain to expose the client model of the user itself and an allowed extent of the exposure.

In summary, the electronic device 200 according to this embodiment can provide user information of itself to the base station, so that the base station determines a specific implementation of split learning in a manner that effectively protects privacy and data security.

<Third Embodiment>

Figure 15 is a block diagram illustrating functional modules of an electronic device 300 for model split according to another embodiment of the present disclosure. As shown in Figure 15, the electronic deice 300 includes a determination unit 301 and a switching unit 302. The determination unit 301 is configured to determine a current path for the model split based on a calculating state and a communication state of entities, wherein the current path comprises: a split point of the neural network model, split entities which participate in the model split to execute a part of respective parts of the neural network model corresponding to the split point, and a participation order of the split entities. The switching unit 302 is configured to determine, when path switching is to be performed, a target path as a path to which the model split is to be switched, such that the model transferring between the current path and the target path is preferentially carried out through a sidelink.

The electronic device 300 may be arranged on a network side or a cloud server side, for example, may be arranged on a wireless transceiving node side. A wireless transceiver node here may be a base station, an access point (AP), a roadside unit, or the like. In particular, the electronic device 300 may be arranged on at least one of the following: a core network side, a base station, an edge server and a cloud server.

The determination unit 301 and the switching unit 302 may be implemented by one or more processing circuitries. The processing circuitry may be implemented as a chip or a processor, for example. It should be understood that various functional units in the electronic device shown in Figure 15 are only logical modules determined based on specific functions thereof, and are not intended to limit a specific implementation.

It should be noted that the electronic device 300 may be implemented at a chip level or at a device level. For example, the electronic device 300 may operate as the base station itself and may further include a memory, a transceiver (not shown), and other external devices. The memory may store related data information and programs that the base station needs to execute to achieve various functions. The transceiver may include one or more communication interfaces to support communications with different devices (such as another base station, UE, and the like). An implementation of the transceiver is not specifically limited here. Furthermore, the electronic device 300 may also operate as a server.

An example of a scenario related to the model split is given in Figure 14, which should be understood to be non-restrictive, and the scenario to which the technical solution of the embodiment is applicable is not limited thereto. For example, Figure 14 shows model split in an inference stage, which is not restrictive, and the technical solution of the embodiment is also applicable to model split in a learning/training stage. In other words, the model split here may include a training stage and/or an inference stage.

In the embodiment, the entity may be various end devices capable of participating in model split, such as UE, a mobile base station, an edge server, a cloud server, and the like. The entity may provide a calculating state and a communication state of the entity to the electronic device 300. Furthermore, for example, the entity may estimate the calculating state thereof based on a configuration and state (occupancy rate) of a CPU of the entity, the amount of data to be executed, and the like, and estimate the communication state thereof by estimating the downlink and sidelink based on a pilot.

The determination unit 301 determines a path for model split based on the calculating state and the communication state of the entities. In order to distinguish the path from a path to be switched to when switching occurs, the path determined here is referred to as a current path, and the path to be switched to mentioned later is referred to as a target path. The path here is to define a specific plan for model split. The path involves the following three aspects: a split point of a neural network model, that is, how to split the model specifically; entities that execute split parts of the model respectively (referred to as split entities); and an order in which the split entities execute the split parts of the model.

Figure 16 shows an example of a path. Taking path 1 which is the current path as an example, the path 1 includes: split point 1 and split point 2; split entity 1, split entity 2 and split entity 3 (referred to as entity 1, entity 2 and entity 3 for short); and a model execution order of entity 1, entity 2 and entity 3.

Here, the split entity may include a source entity and a subsequent split entity. The source entity has data for training or inference and executes a first part of the split neural network model. In the example of Figure 16, entity 1 is the source entity, and entity 2 and entity 3 are subsequent split entities. A split entity is, for example, one of the following: UE, a mobile base station, an edge server, and a cloud server.

The split entity may include a processor configured to perform model split and calculation. Specifically, in a scenario where model split is required, description is given with respect to inference performing and training performing respectively.

When performing inference, a source entity executes its corresponding model part based on local data to obtain intermediate data $I_1$, which serves as an input to a downstream entity; for a non-last split entity i on the path, the split entity i executes its corresponding model part based on the intermediate data $I_{i-1}$ obtained from the upstream entity to obtain intermediate data $I_i$, which serves as an input to a downstream entity; for the last split entity i on the path, the split entity i executes its corresponding model part based on the intermediate data $I_{i-1}$ obtained from the upstream entity and outputs an inference result. The last split entity may transmit the inference result directly to the source entity, or may transmit the inference result to the base station to be forwarded to the source entity by the base station, or may transmit the inference result to another entity to be transmitted to the source entity via the another entity, which is not restrictive.

When performing training, a source entity executes its corresponding model part based on local data to obtain intermediate data $T_1^D$, which serves as the input to a downstream entity; the source entity receives intermediate data $T_1^U$ from the downstream entity, executes the backward propagation algorithm, and updates its corresponding model part; for a non-last split entity i on the path, the split entity executes its corresponding model part based on the intermediate data $T_{i-1}^D$ obtained from the upstream entity to obtain intermediate data, which serves as an input to a downstream entity, and executes the backward propagation algorithm based on the intermediate data $T_i^U$ obtained from the downstream entity to update its corresponding model part, and returns the reverse output intermediate data $T_{i-1}^U$ to its upstream entity; for a last split entity i on the path, the split entity i executes its corresponding model part based on the intermediate data $T_{i-1}^D$ obtained from an upstream entity, executes the backward propagation algorithm based on an output result and a label to update its corresponding model part, and returns the reverse output intermediate data $T_{i-1}^U$ to the upstream entity.

In addition, the split entity may further perform state estimation as described above, transmits state information thereof (for example, information on a calculating state and a communication state) to the electronic device 300, receives relevant information from the electronic device 300 and other entities during the model split, and transmits a calculation result and other information.

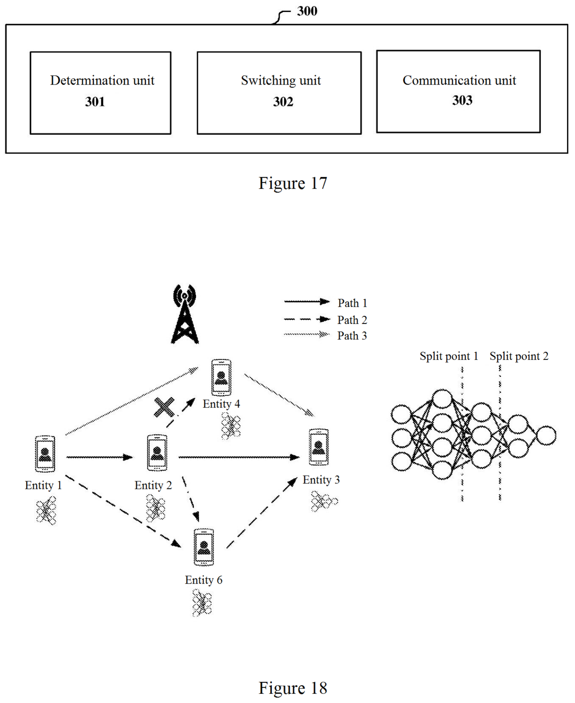

Accordingly, Figure 17 is a block diagram illustrating functional modules of an electronic device 300 for model split according to another embodiment of the present disclosure. Compared with Figure 15, the electronic device 300 further includes a communication unit 303 for performing various communication functions. For example, the communication unit 303 is configured to transmit at least a part of information of the current path of the determination unit 301 to a corresponding split entity. The communication unit 303 may be configured to transmit, to a split entity, a portion of the neural network model or a split point corresponding to the split entity. In this way, the split entity may perform model split and calculation based on the received information as described above, for example. In addition, the communication unit 303 may also transmit a portion of the neural network model or a split point corresponding to a certain split entity to another entity, to be forwarded to the split entity by the another entity. The communication unit 303 may further assist the electronic device 300 in allocating, establishing, and releasing link resources corresponding to a path. On the other hand, when model split is not required, the communication unit 303 may transmit, to the source entity, indication information of not performing model split.

The communication unit 303 may be further configured to receive, from a split entity, an indication message indicating that the path switching is to be performed. For example, the indication message may be transmitted by the split entity when it is determined that the split entity is no longer suitable for performing the model split. The switching unit 302 may determine to perform the path switching based on the indication message. It should be understood that this approach is not restrictive, and the switching unit 302 may determine to perform the path switching when it is determined that the current path cannot meet the requirement of inference or training of the neural network model.

When performing the path switching, for example, the model part (and intermediate data) of the split entity in the current path that no longer participates in the model split needs to be transferred to a corresponding split entity in the target path. In order to reduce occupation of uplink and downlink resources by the switching processing, reduce overhead for model transferring, and improve a transmission efficiency, the switching unit 302 preferentially determines, a path through which the model transferring can be performed through sidelink between the current path and the path, as a target path, so as to perform model transferring between two entities through the sidelink, thereby completing the path switching. The switching unit 302 may further consider requirements for calculation and model transferring delay when determining the target path.

For example, the determination unit 301 may determine the current path and the candidate paths, and the switching unit 302 determines the target path from among the candidate paths when the path switching is to be performed. Alternatively, the determination unit 301 may determine, when the path switching is to be performed, candidate paths which are possible switching targets; and the switching unit 302 determines the target path from among the candidate paths. In other words, the candidate paths may be determined together with the current path, or may be determined dynamically when it is determined that the path switching is to be performed, which is not restrictive.

For example, the switching unit 302 may further determine a new split entity which is to replace one or more existing split entities in the current path when the path switching is to be performed, so as to form the target path based on the current path and the new split entity. The model transferring can be performed through the sidelink between the new split entity and the existing split entity to be replaced. Preferably, the two entities correspond to a same split point.

Operations of the switching unit 302 under different switching situations are to be described below.

In a first example, a split point is given, a target path is given, and the switching unit 302 is configured to enable model transferring between a new split entity corresponding to an existing split entity in the current path and an existing split entity replaced by the new split entity to be performed through a sidelink. Referring to an example shown in Figure 16, the split points are given as split point 1 and split point 2. Entity 2 is no longer capable of participating in model split, and therefore path switching is required, that is, to switch to path 2 (as shown by the dashed line). In this example, the second part of the model corresponding to entity 2 may be directly transmitted to entity 4 that works in place of entity 2 through a sidelink shown by the dot-dash line, or may be forwarded to entity 4 through a gNB (as shown by the gray line). According to the solution of this embodiment, the switching unit 302 enables entity 2 and entity 4 to transfer the second part of the model by direct transmission via the sidelink, so that the overhead for model transferring is reduced.

In a second example, a split point is given, a target path is not given, and the switching unit 302 is configured to preferentially determine a target path in which model transferring can be performed between a new split entity corresponding to an existing split entity in the current path and an existing split entity replaced by the new split entity through the sidelink.

Figure 18 shows a schematic example of path switching in this situation. The split points are given as split point 1 and split point 2. Entity 2 is no longer capable of participating in model split, and therefore path switching is required. The candidate paths include path 2 (shown by the dashed line) and path 3 (shown by the gray line). Entity 2 corresponds to entity 6 in path 2, and corresponds to entity 4 in path 3. There is no sidelink between entity 2 and entity 4 satisfying the condition, and there is a sidelink between entity 2 and entity 6 satisfying the condition. Therefore, the switching unit 302 preferentially determines path 2 as a target path, and enables model transferring to be performed between entity 2 and entity 4 via the sidelink.

In a third example, a split point is not given, and the switching unit 302 is configured to preferentially determine a target path in which model transferring can be performed between a new split entity corresponding to an existing split entity in the current path and an existing split entity replaced by the new split entity through the sidelink, and the two entities correspond to a same split point.

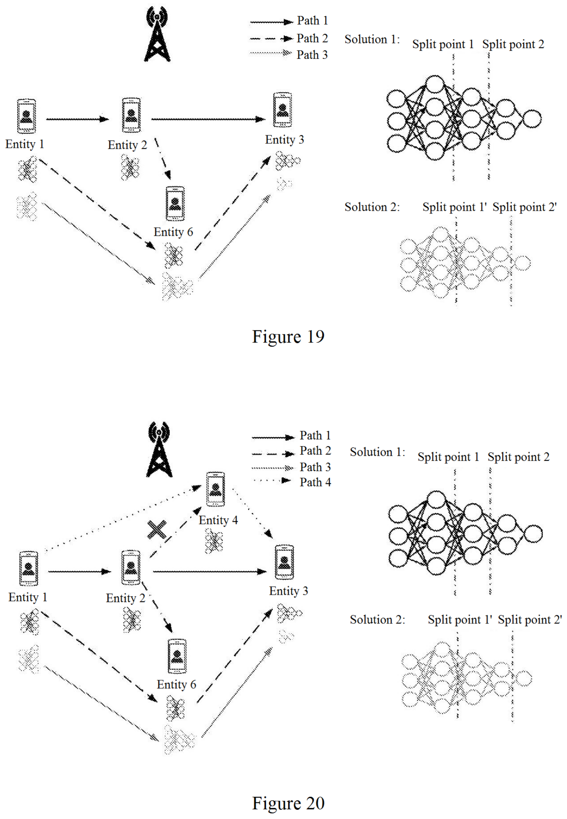

In this example, a situation where a split entity in the target path is given is considered. Figure 19 shows a schematic example of path switching in this situation. There are two solutions for the split point. Solution 1 includes split point 1 and split point 2, and Solution 2 includes split point 1' and split point 2'. Entity 2 is no longer capable of participating in model split, and therefore path switching is required. The candidate paths include path 2 (shown by the dashed line) and path 3 (shown by the gray line). Path 2 and Path 3 include the same split entities, but Path 2 adopts the solution 1 of split points, and Path 3 adopts the solution 2 of split points. There is a sidelink between entity 2 and entity 6 satisfying the condition. Application of the solution 1 of split points does not cause additional model transferring. Therefore, the switching unit 302 preferentially determines path 2 as the target path, and enables model transferring to be performed between entity 2 and entity 6 via the sidelink.

In a fourth example, a situation where a split point is not given and a split entity in a target path is not given is considered. Figure 20 shows a schematic example of path switching in this situation. Similarly, there are two solutions for the split point. Solution 1 includes split point 1 and split point 2, and solution 2 includes split point 1' and split point 2'. Entity 2 is no longer capable of participating in model split, and therefore path switching is required. The candidate paths include path 2 (shown by the dashed line), path 3 (shown by the gray line), and path 4 (shown by the dotted line). Path 2 and path 3 include the same split entities, but path 2 adopts the solution 1 of split points, and path 3 adopts the solution 2 of split points. There is no sidelink between entity 2 and entity 4 satisfying the condition, and there is a sidelink between entity 2 and entity 6 satisfying the condition. Application of the solution 1 of split points does not cause additional model transferring, and there is a sidelink between entity 2 and entity 6 satisfying the condition. Therefore, the switching unit 302 preferentially determines path 2 as the target path, and enables model transferring to be performed between entity 2 and entity 6 via the sidelink.

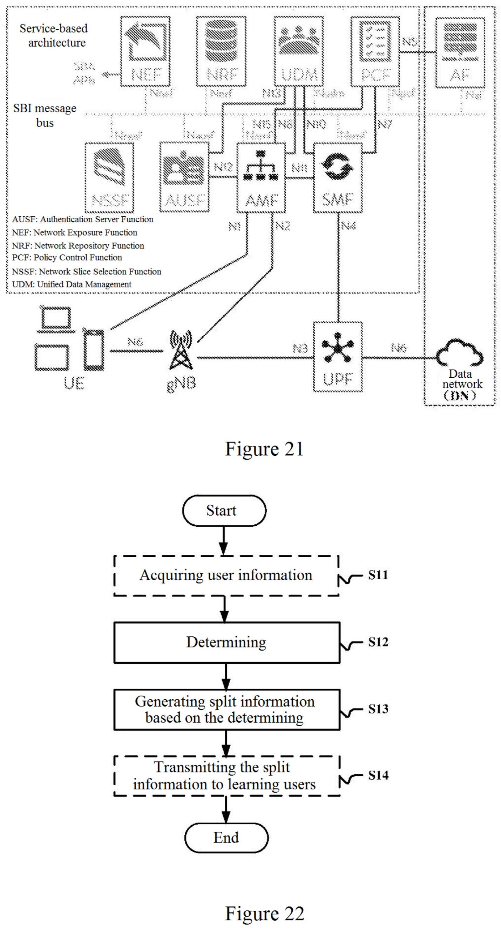

Figure 21 shows a schematic diagram of a 3GPP network model to which the technical solution of the embodiment of the present disclosure is applicable. The electronic device 300 according to the embodiment may be deployed on an application function (AF), for example. The UE accesses the data network (DN) through the gNB and the user plane function (UPF) and links to the AF. The reported model is transferred to the AF through the UPF, and the AF may obtain sidelink information of the UE through a network exposure function (NEF).

With the electronic device 300 according to the embodiment, a new path allowing model transferring through a sidelink is preferentially selected when performing path switching in model split, so that uplink and downlink resources are saved, an overhead for model transferring is reduced, and transferring efficiency is improved.

<Fourth Embodiment>

In the description of the electronic device for split learning and the electronic device for model split in the above embodiments, some processes or methods are further disclosed. Hereinafter, an overview of the methods is given without repeating some of details discussed above. It should be noted that although disclosed in the description of the electronic device for split learning or the electronic device for model split, the methods do not necessarily adopt the components as described or be performed by those components. For example, an embodiment of the electronic device for split learning or model split may be implemented partially or entirely using hardware and/or firmware, while a method for split learning and a method for model split discussed below may be implemented entirely by a computer-executable program, although the method may employ the hardware and/or firmware for the electronic device for split learning or the electronic device for model split.

Figure 22 shows a flow chart of a method for split learning according to an embodiment of the present disclosure. The method includes: determining, based on a channel state of a link between users which is related to a sidelink, one or more of the following: learning users participating in the split learning, a participation order for the learning users, and a communication link between each of the learning users and a downstream learning user thereof for client model transferring (S12); and generating split information for the learning user based on the determining (S13). The method may be performed on a base station side, for example.

The channel state includes, for example, whether there is the link which is related to the sidelink and a link quality of the link which is related to the sidelink. The link between users which is related to the sidelink includes one or more of a direct sidelink, a sidelink relay and a sidelink relay chain.

For example, in step S12, determination is performed further based on other user information. The other user information includes, for example, one or more of the following: amount of data, calculating capability, amount of electricity, storage capability, transmission power, a channel state of an uplink and a downlink between the user and a base station, location information and user consent information of the user. The user consent information may include one or more of the following:

a trust level of the user for other users, and whether the user agrees to perform the client model transferring through the uplink and downlink between the user and the base station.

The trust level of the user for the other users may include to which of the other users the user agrees to transmit a client model of the user itself. The trust level of the user for other users may further include one or more of the following: to which of the other users the user agrees to transmit the client model of the user itself through the uplink and downlink; to which of the other users the user agrees to transmit the client model of the user itself through which sidelink relays; and to which of the other users the user agrees to transmit the client model of the user itself through which sidelink relay chains.

For example, in step S12, the determining may be performed based on one or more of the following principles: it is necessary or preferential to perform the client model transferring through a direct sidelink; it is necessary or preferential to avoid performing the client model transferring through an uplink and downlink between the user and a base station; minimizing a total sum of time for the client model transferring throughout the whole procedure of the split learning; and minimizing an overall probability of breaking off of a link for the client model transferring throughout the whole procedure of the split learning.

As shown in a dashed box in Figure 22, the method may further include a step S11 of acquiring user information from the user, where the user information includes the above-mentioned other user information and a channel state of a link which is related to the sidelink between the user and another user.

As shown in another dashed box in Figure 22, the above method may further include a step S14 of transmitting the split information for each of the learning users to the learning user. For example, for each of the learning users, the split information includes one or more of the following: a model split point or a corresponding client model, an upstream learning user and/or a downstream learning user of the learning user, configuration of a communication link for the client model transferring, and link resources allocated by a base station.

The configuration of the communication link for the client model transferring includes: which one of the direct sidelink, the sidelink relay, the sidelink relay chain and the uplink and downlink between the user and the base station is adopted. In a case of adopting one of the sidelink relay and the sidelink relay chain, the configuration further includes information on the used relay or relay chain.

The above method corresponds to the electronic device 100 in the first embodiment, detailed description of which is given in the first embodiment and is not repeated here.

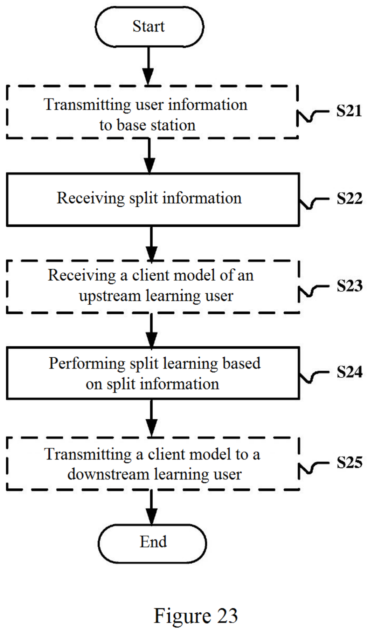

Figure 23 shows a flow chart of a method for split learning according to another embodiment of the present disclosure. The method includes: receiving split information for split learning from a base station (S22), where the split information is generated by the base station based on the following determining: the base station determines, based on a channel state of a link between users which is related to a sidelink, one or more of learning users participating in the split learning, a participation order for the learning users, and a communication link between each of the learning users and a downstream learning user thereof for client model transferring; and performing the split learning based on the split information (S24). The method may be performed on a user side, for example.

The channel state includes whether there is the link which is related to the sidelink and a link quality of the link which is related to the sidelink. The link between users which is related to the sidelink includes one or more of a direct sidelink, a sidelink relay and a sidelink relay chain.

For example, the split information includes one or more of the following: a model split point or a corresponding client model, an upstream learning user and/or a downstream learning user of the learning user, configuration of a communication link for the client model transferring, and link resources allocated by a base station. The configuration of the communication link for the client model transferring includes: which one of the direct sidelink, the sidelink relay, the sidelink relay chain and the uplink and downlink between the user and the base station is adopted. For example, in a case of adopting one of the sidelink relay and the sidelink relay chain, the configuration further includes information on the used relay or relay chain.

As shown in a dashed box in Figure 23, the method may further include a step S21 of transmitting user information of the user to the base station, where the user information includes a channel state of a link which is related to the sidelink between the user and another user. In addition, the user information may further include other user information. The other user information includes one or more of the following: amount of data, calculating capability, amount of electricity, storage capability, transmission power, a channel state of an uplink and a downlink between the user and a base station, location information and user consent information of the user. The base station performs the determining further based on the other user information.

For example, the user consent information includes one or more of the following: a trust level of the user for other users, and whether the user agrees to perform the client model transferring through the uplink and downlink between the user and the base station. The trust level of the user for the other users includes to which of the other users the user agrees to transmit a client model of the user itself. The trust level of the user for other users may further include one or more of the following: to which of the other users the user agrees to transmit the client model of the user itself through the uplink and downlink; to which of the other users the user agrees to transmit the client model of the user itself through which sidelink relays; and to which of the other users the user agrees to transmit the client model of the user itself through which sidelink relay chains.

As shown by the other two dashed boxes in Figure 23, the method further includes: receiving a client model of an upstream learning user from the upstream learning user based on the split information (S23), and transmitting the client model of the present learning user to the downstream learning user through the communication link for the client model transferring indicated in the split information (S25).

The above method corresponds to the electronic device 200 in the second embodiment, detailed description of which is given in the second embodiment and is not repeated here.

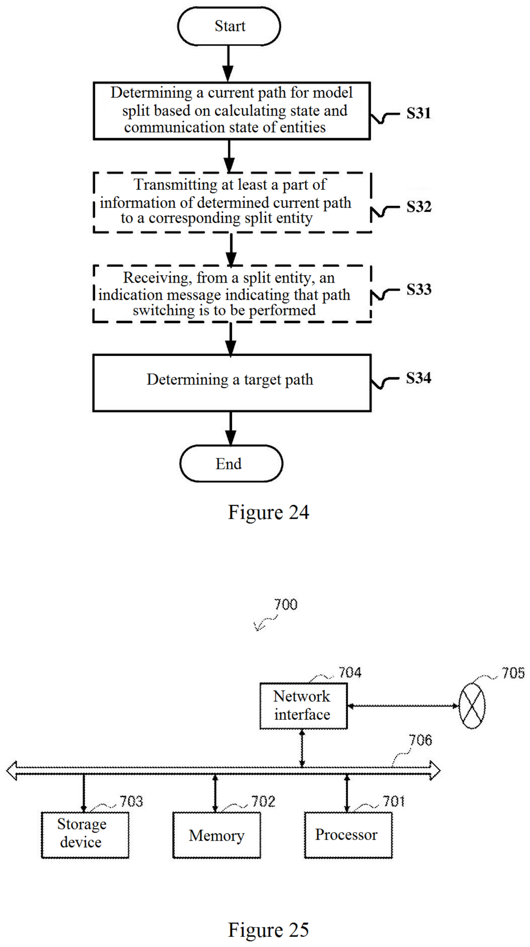

Figure 24 shows a flow chart of a method for model split according to another embodiment of the present disclosure. The method includes: determining a current path for the model split based on a calculating state and a communication state of entities (S31), where the current path includes: a split point of the neural network model, split entities which participate in the model split to execute a part of respective parts of the neural network model corresponding to the split point, and a participation order of the split entities; and determining , when path switching is to be performed, a target path as a path to which the model split is to be switched, such that the model transferring between the current path and the target path is preferentially carried out through a sidelink (S34). The method may be implemented on the network side, for example, and specifically may be implemented on one of the following: a core network side, a base station, an edge server, or a cloud server.

For example, the model split may include a training stage and/or an inference stage. The split entity may include a source entity and a subsequent split entity. The source entity has data for training or inference and executes a first part of the split neural network model. The split entity is, for example, one of the following: user equipment, a mobile base station, an edge server and a cloud server.

As shown by a dashed box in Figure 24, the method may further include a step S32 of transmitting at least a part of information of the determined current path to a corresponding split entity. For example, a portion of the neural network model or a split point corresponding to a split entity may be transmitted to the split entity.

As shown in another dashed box in Figure 24, the method may further include a step S33 of receiving, from a split entity, an indication message indicating that the path switching is to be performed. For example, the indication message is transmitted by the split entity when it is determined that the split entity is no longer suitable for performing the model split.

In step S34, when the path switching is to be performed, candidate paths which are possible switching target may be determined and the target path is determined from among the candidate paths. Alternatively, the current path and the candidate path may be determined in step S31, and the target path may be determined in S34 from among the candidate paths when the path switching is to be performed.

For example, a new split entity which is to replace one or more existing split entities in the current path may be determined when the path switching is to be performed, so as to form the target path based on the current path and the new split entity.

In an example, when the path switching is to be performed, in a case of the split point being given, a target path in which model transferring can be performed between a new split entity corresponding to an existing split entity in the current path and an existing split entity replaced by the new split entity through the sidelink is preferentially determined in step S34.

In another example, when the path switching is to be performed, in a case of the split point being not given, a target path in which model transferring can be performed between a new split entity corresponding to an existing split entity in the current path and an existing split entity replaced by the new split entity through the sidelink is preferentially determined in step S34, and the new split entity and the existing split entity correspond to the same split point.

The above method corresponds to the electronic device 300 in the third embodiment, detailed description of which is given in the third embodiment and is not repeated here.

It is to be noted that the above methods can be used in combination or alone.

The technology of the present disclosure is applicable to various products.

For example, the electronic device 100 or the electronic device 300 may be implemented as any type of server, such as a tower server, a rack server, and a blade server. The electronic device 100 or the electronic device 300 may be a control module installed on a server (such as an integrated circuit module including a single wafer, and a card or blade inserted into a slot of a blade server).

For example, the electronic device 100 or the electronic device 300 may be implemented as various base stations. The base station may be implemented as any type of evolved Node B (eNB) or gNB (5G base station). An eNB includes, for example, a macro eNB and a small eNB. The small eNB may be an eNB covering a cell smaller than a macro cell, such as a pico eNB, a micro eNB, or a home (femto) eNB. A similar situation may be applied to the gNB. Alternatively, the base station may be implemented as any other type of base station, such as a NodeB or a base transceiver station (BTS). The base station may include a body (which is also referred to as a base station device) configured to control wireless communications and one or more remote radio heads (RRHs) arranged at a different place from the body. In addition, various type of user equipment may serve as a base station by temporarily or semi-permanently performing functions of the base station.

The electronic device 200 may be implemented as various user equipments. The user equipment may be implemented as a mobile terminal (such as a smart phone, a tablet personal computer (PC), a notebook PC, a portable game terminal, a portable/dongle-type mobile router, and a digital camera) or a vehicle-mounted terminal (such as a car navigation device). The user equipment may be implemented as a terminal that performs machine-to-machine (M2M) communications (which is also referred to as a machine type communication (MTC) terminal). Furthermore, the user equipment may be a wireless communication module (such as an integrated circuit module including a single wafer) installed on each of the above-mentioned terminals.

[Application examples of server]

Figure 25 is a block diagram showing an example of a schematic configuration of a server 700 to which the technology of the present disclosure is applicable. The server 700 includes a processor 701, a memory 702, a storage device 703, a network interface 704, and a bus 706.

The processor 701 may be, for example, a central processing unit (CPU) or a digital signal processor (DSP), and controls functions of the server 700. The memory 702 includes a random-access memory (RAM) and a read-only memory (ROM), and stores data and a program executed by the processor 701. The storage device 703 may include a storage medium, such as a semiconductor memory and a hard disk.

The network interface 704 is a wired communication interface for connecting the server 700 to a wired communication network 705. The wired communication network 705 may be a core network such as an Evolved Packet Core (EPC), or a packet data network (PDN) such as the Internet.

The bus 706 connects the processor 701, the memory 702, the storage device 703, and the network interface 704 to each other. The bus 706 may include two or more buses having different speeds (such as a high-speed bus and a low-speed bus).

In the server 700 shown in Figure 25, the determination unit 101, the generation unit 102 and the communication unit 103 of the electronic device 100 may be implemented by the processor 701. For example, the processor 701 may determine a specific implementation of the split learning according to a channel state of the link between users which is related to a sidelink, by executing the functions of the determination unit 101, the generation unit 102 and the communication unit 103, so that privacy and data security can be effectively protected. In addition, the determination unit 301, the switching unit 302 and the communication unit 303 of the electronic device 300 may be implemented by the processor 701. For example, the processor 701 may execute the functions of the determination unit 301, the switching unit 302 and the communication unit 303, so that a new path capable of performing model transferring through a sidelink is preferentially selected when performing path switching in model split, thereby saving uplink and downlink resources, reducing an overhead for model transferring, and improving transferring efficiency.

[Application example regarding a base station]

(First Application Example)

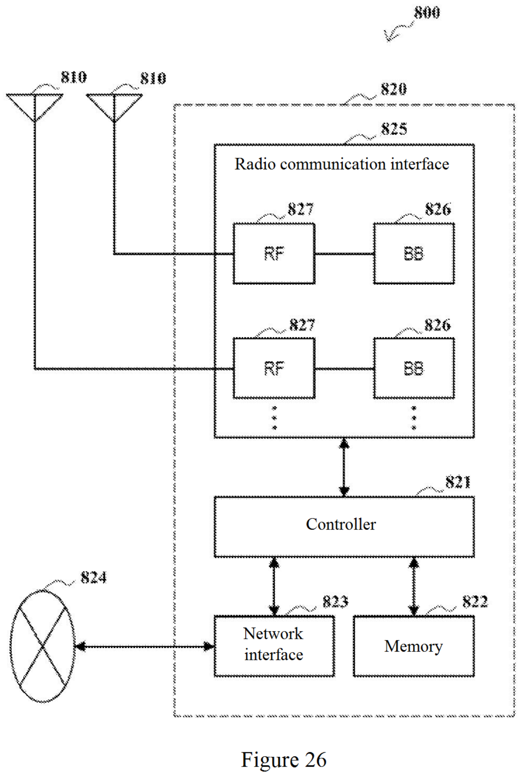

Figure 26 is a block diagram showing a first example of a schematic configuration of an eNB or gNB to which the technology of the present disclosure is applicable. It should be noted that the following description is given by taking the eNB as an example, which is also applicable to the gNB. An eNB 800 includes one or more antennas 810 and a base station apparatus 820. The base station apparatus 820 and each of the antennas 810 may be connected to each other via an RF cable.

Each of the antennas 810 includes a single or multiple antennal elements (such as multiple antenna elements included in a multiple-input multiple-output (MIMO) antenna), and is used for the base station apparatus 820 to transmit and receive wireless signals. As shown in Figure 26, the eNB 800 may include the multiple antennas 810. For example, the multiple antennas 810 may be compatible with multiple frequency bands used by the eNB 800. Although Figure 26 shows the example in which the eNB 800 includes the multiple antennas 810, the eNB 800 may also include a single antenna 810.

The base station apparatus 820 includes a controller 821, a memory 822, a network interface 823, and a radio communication interface 825.

The controller 821 may be, for example, a CPU or a DSP, and operates various functions of a higher layer of the base station apparatus 820. For example, the controller 821 generates a data packet from data in signals processed by the radio communication interface 825, and transfers the generated packet via the network interface 823. The controller 821 may bundle data from multiple base band processors to generate the bundled packet, and transfer the generated bundled packet. The controller 821 may have logical functions of performing control such as radio resource control, radio bearer control, mobility management, admission control and scheduling. The control may be performed in corporation with an eNB or a core network node in the vicinity. The memory 822 includes a RAM and a ROM, and stores a program executed by the controller 821 and various types of control data (such as terminal list, transmission power data and scheduling data).

The network interface 823 is a communication interface for connecting the base station apparatus 820 to a core network 824. The controller 821 may communicate with a core network node or another eNB via the network interface 823. In this case, the eNB 800, and the core network node or another eNB may be connected to each other via a logic interface (such as an S1 interface and an X2 interface). The network interface 823 may also be a wired communication interface or a wireless communication interface for wireless backhaul. If the network interface 823 is a wireless communication interface, the network interface 823 may use a higher frequency band for wireless communication than that used by the radio communication interface 825.

The radio communication interface 825 supports any cellular communication scheme (such as Long Term Evolution (LTE) and LTE-advanced), and provides wireless connection to a terminal located in a cell of the eNB 800 via the antenna 810. The radio communication interface 825 may typically include, for example, a baseband (BB) processor 826 and an RF circuit 827. The BB processor 826 may perform, for example, encoding/decoding, modulating/demodulating, and multiplexing/demultiplexing, and performs various types of signal processing of layers (such as L1, Media Access Control (MAC), Radio Link Control (RLC), and a Packet Data Convergence Protocol (PDCP)). The BB processor 826 may have a part or all of the above-described logical functions instead of the controller 821. The BB processor 826 may be a memory storing communication control programs, or a module including a processor and a related circuit configured to execute the programs. Updating the program may allow the functions of the BB processor 826 to be changed. The module may be a card or a blade that is inserted into a slot of the base station apparatus 820. Alternatively, the module may also be a chip that is mounted on the card or the blade. Meanwhile, the RF circuit 827 may include, for example, a mixer, a filter, and an amplifier, and transmits and receives wireless signals via the antenna 810.

As shown in Figure 26, the radio communication interface 825 may include the multiple BB processors 826. For example, the multiple BB processors 826 may be compatible with multiple frequency bands used by the eNB 800. The radio communication interface 825 may include multiple RF circuits 827, as shown in Figure 26. For example, the multiple RF circuits 827 may be compatible with multiple antenna elements. Although Figure 26 shows the example in which the radio communication interface 825 includes the multiple BB processors 826 and the multiple RF circuits 827, the radio communication interface 825 may also include a single BB processor 826 or a single RF circuit 827.

In the eNB 800 as shown in Figure 26, the communication unit 103 of the electronic device 100 and the transceiver may be implemented by the radio communication interface 825. At least a part of the functions may be implemented by the controller 821. For example, the controller 821 may determine a specific implementation of the split learning according to a channel state of the link between users which is related to a sidelink, by executing the functions of the determination unit 101, the generation unit 102 and the communication unit 103, so that privacy and data security can be effectively protected. The communication unit 303 of the electronic device 300 and the transceiver may be implemented by the radio communication interface 825. At least a part of the functions may be implemented by the controller 821. For example, the controller 821 executes the functions of the determination unit 301, the switching unit 302 and the communication unit 303, so that a new path capable of performing model transferring through a sidelink is preferentially selected when performing path switching in model split, thereby saving uplink and downlink resources, an reducing overhead for model transferring, and improving transferring efficiency.

(Second Application Example)

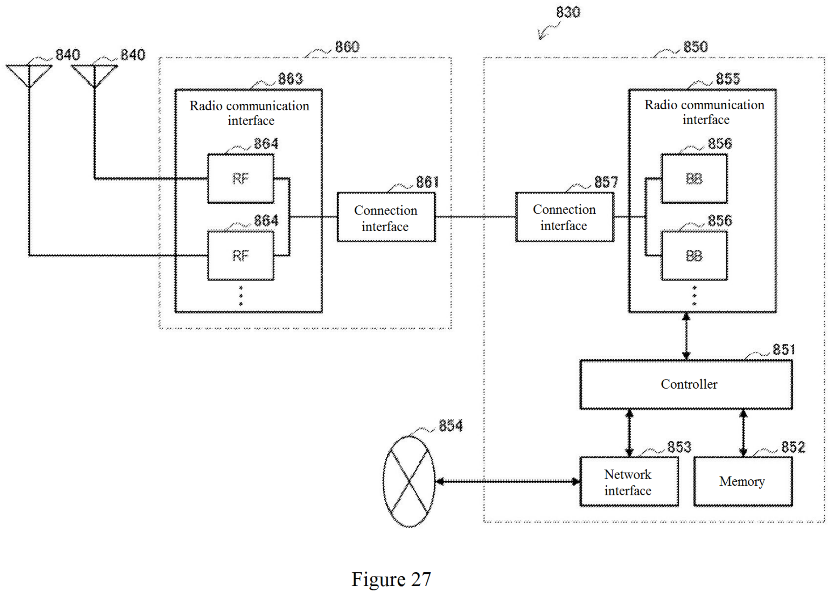

Figure 27 is a block diagram showing a second example of a schematic configuration of an eNB or gNB to which the technology of the present disclosure is applicable. It should be noted that the following description is given by taking the eNB as an example, which is also applied to the gNB. An eNB 830 includes one or more antennas 840, a base station apparatus 850, and an RRH 860. The RRH 860 and each of the antennas 840 may be connected to each other via an RF cable. The base station apparatus 850 and the RRH 860 may be connected to each other via a high velocity line such as an optical fiber cable.

Each of the antennas 840 includes a single or multiple antennal elements (such as multiple antenna elements included in an MIMO antenna), and is used for the RRH 860 to transmit and receive wireless signals. As shown in Figure 27, the eNB 830 may include the multiple antennas 840. For example, the multiple antennas 840 may be compatible with multiple frequency bands used by the eNB 830. Although Figure 27 shows the example in which the eNB 830 includes the multiple antennas 840, the eNB 830 may also include a single antenna 840.

The base station apparatus 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to Figure 26.

The radio communication interface 855 supports any cellular communication scheme (such as LTE and LTE-advanced), and provides wireless communication to a terminal located in a sector corresponding to the RRH 860 via the RRH 860 and the antenna 840. The radio communication interface 855 may typically include, for example, a BB processor 856. The BB processor 856 is the same as the BB processor 826 described with reference to Figure 26, except that the BB processor 856 is connected to an RF circuit 864 of the RRH 860 via the connection interface 857. As show in Figure 27, the radio communication interface 855 may include the multiple BB processors 856. For example, the multiple BB processors 856 may be compatible with multiple frequency bands used by the eNB 830. Although Figure 27 shows the example in which the radio communication interface 855 includes the multiple BB processors 856, the radio communication interface 855 may also include a single BB processor 856.

The connection interface 857 is an interface for connecting the base station apparatus 850 (radio communication interface 855) to the RRH 860. The connection interface 857 may also be a communication module for communication in the above-described high velocity line that connects the base station apparatus 850 (radio communication interface 855) to the RRH 860.

The RRH 860 includes a connection interface 861 and a radio communication interface 863.

The connection interface 861 is an interface for connecting the RRH 860 (radio communication interface 863) to the base station apparatus 850. The connection interface 861 may also be a communication module for communication in the above-described high velocity line.

The radio communication interface 863 transmits and receives wireless signals via the antenna 840. The radio communication interface 863 may typically include, for example, the RF circuit 864. The RF circuit 864 may include, for example, a mixer, a filter and an amplifier, and transmits and receives wireless signals via the antenna 840. The radio communication interface 863 may include multiple RF circuits 864, as shown in Figure 27. For example, the multiple RF circuits 864 may support multiple antenna elements. Although Figure 27 shows the example in which the radio communication interface 863 includes the multiple RF circuits 864, the radio communication interface 863 may also include a single RF circuit 864.

In the eNB 830 as shown in Figure 27, the communication unit 103 of the electronic device 100 and the transceiver may be implemented by the radio communication interface 855 and/or the radio communication interface 863. At least a part of the functions may be implemented by the controller 851. For example, the controller 851 may determine a specific implementation of the split learning according to a channel state of the link between users which is related to a sidelink, by executing the functions of the determination unit 101, the generation unit 102 and the communication unit 103, so that privacy and data security can be effectively protected. The communication unit 303 of the electronic device 300 and the transceiver may be implemented by the radio communication interface 855 and/or the radio communication interface 863. At least a part of the functions may be implemented by the controller 851. For example, the controller 851 executes the functions of the determination unit 301, the switching unit 302 and the communication unit 303, so that a new path capable of performing model transferring through a sidelink is preferentially selected when performing path switching in model split, thereby saving uplink and downlink resources, an reducing overhead for model transferring, and improving transferring efficiency.

[Application example regarding user equipment]

(First Application Example)

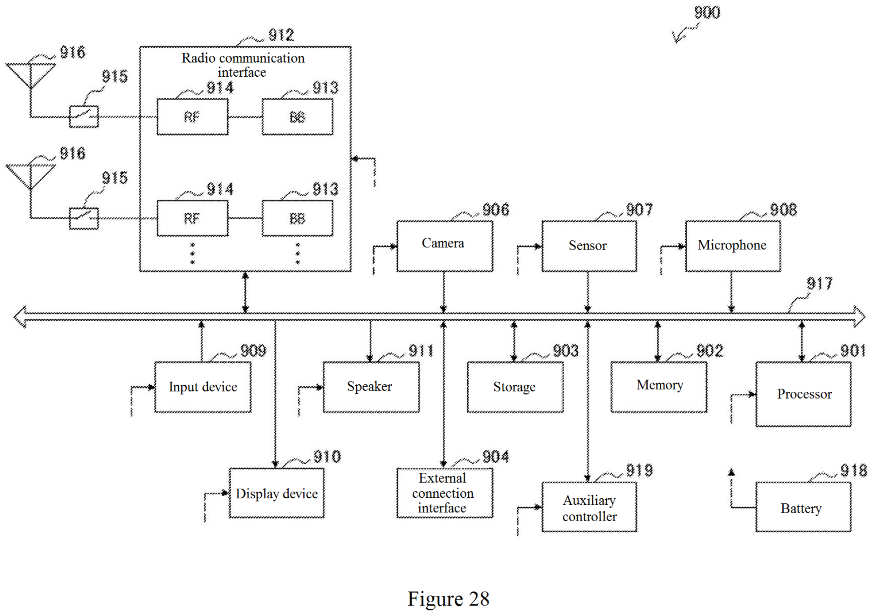

Figure 28 is a block diagram showing an example of a schematic configuration of a smartphone 900 to which the technology of the present disclosure is applicable. The smartphone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smartphone 900. The memory 902 includes a RAM and a ROM, and stores a program executed by the processor 901 and data. The storage 903 may include a storage medium such as a semiconductor memory and a hard disc. The external connection interface 904 is an interface for connecting an external device (such as a memory card and a universal serial bus (USB) device) to the smartphone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyro sensor, a geomagnetism sensor, and an acceleration sensor. The microphone 908 converts sounds that are inputted to the smartphone 900 to audio signals. The input device 909 includes, for example, a touch sensor configured to detect touch onto a screen of the display device 910, a keypad, a keyboard, a button, or a switch, and receives an operation or information inputted from a user. The display device 910 includes a screen (such as a liquid crystal display (LCD) and an organic light-emitting diode (OLED) display), and displays an output image of the smartphone 900. The speaker 911 converts audio signals that are outputted from the smartphone 900 to sounds.

The radio communication interface 912 supports any cellular communication scheme (such as LTE and LTE-advanced), and performs a wireless communication. The radio communication interface 912 may include, for example, a BB processor 913 and an RF circuit 914. The BB processor 913 may perform, for example, encoding/decoding, modulating/demodulating, and multiplexing/de-multiplexing, and perform various types of signal processing for wireless communications. The RF circuit 914 may include, for example, a mixer, a filter and an amplifier, and transmits and receives wireless signals via the antenna 916. It should be noted that although Figure 28 shows a case that one RF link is connected to one antenna, which is only illustrative, and a case that one RF link is connected to multiple antennas through multiple phase shifters may also exist. The radio communication interface 912 may be a chip module having the BB processor 913 and the RF circuit 914 integrated thereon. The radio communication interface 912 may include multiple BB processors 913 and multiple RF circuits 914, as shown in Figure 28. Although Figure 28 shows the example in which the radio communication interface 912 includes the multiple BB processors 913 and the multiple RF circuits 914, the radio communication interface 912 may also include a single BB processor 913 or a single RF circuit 914.

Furthermore, in addition to a cellular communication scheme, the radio communication interface 912 may support another type of wireless communication scheme such as a short-distance wireless communication scheme, a near field communication scheme, and a wireless local area network (LAN) scheme. In this case, the radio communication interface 912 may include the BB processor 913 and the RF circuit 914 for each wireless communication scheme.

Each of the antenna switches 915 switches connection destinations of the antennas 916 among multiple circuits (such as circuits for different wireless communication schemes) included in the radio communication interface 912.

Each of the antennas 916 includes a single or multiple antenna elements (such as multiple antenna elements included in an MIMO antenna) and is used for the radio communication interface 912 to transmit and receive wireless signals. As shown in Figure 28, the smartphone 900 may include the multiple antennas 916. Although Figure 28 shows the example in which the smartphone 900 includes the multiple antennas 916, the smartphone 900 may also include a single antenna 916.

Furthermore, the smartphone 900 may include the antenna 916 for each wireless communication scheme. In this case, the antenna switches 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to blocks of the smart phone 900 shown in Figure 28 via feeder lines that are partially shown as dashed lines in Figure 28. The auxiliary controller 919 operates, for example, in a sleep mode to achieve a minimum necessary function of the smart phone 900.

In the smartphone 900 as shown in Figure 28, the communication unit 201 of the electronic device 200 and the transceiver may be implemented by the radio communication interface 912. At least part of the functions may be implemented by the processor 901 or the auxiliary controller 919. For example, the processor 901 or the auxiliary controller 919 may provide user information thereof to the base station by executing the functions of the communication unit 201 and the learning unit 202, so that the base station determines a specific implementation of split learning in a manner that effectively protects privacy and data security.

(Second Application Example)

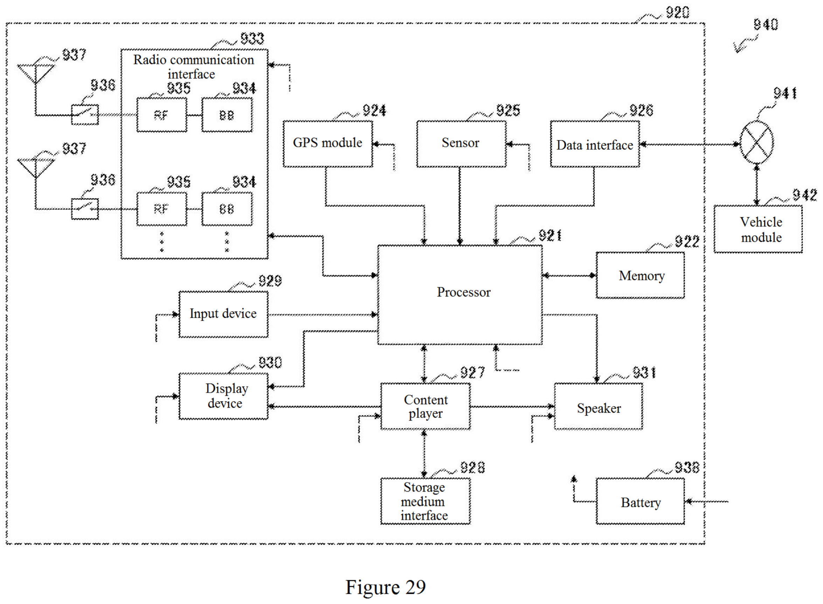

Figure 29 is a block diagram showing an example of a schematic configuration of a car navigation apparatus 920 to which the technology according to the present disclosure may be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example a CPU or a SoC, and controls a navigation function and additional function of the car navigation apparatus 920. The memory 922 includes a RAM and a ROM, and stores a program executed by the processor 921, and data.

The GPS module 924 determines a position (such as latitude, longitude and altitude) of the car navigation apparatus 920 by using GPS signals received from a GPS satellite. The sensor 925 may include a group of sensors such as a gyro sensor, a geomagnetic sensor and an air pressure sensor. The data interface 926 is connected to, for example, an in-vehicle network 941 via a terminal that is not shown, and acquires data (such as vehicle velocity data) generated by the vehicle.

The content player 927 reproduces content stored in a storage medium (such as a CD and a DVD) that is inserted into the storage medium interface 928. The input device 929 includes, for example, a touch sensor configured to detect touch onto a screen of the display device 930, a button, or a switch, and receives an operation or information inputted from a user. The display device 930 includes a screen such as an LCD or OLED display, and displays an image of the navigation function or content that is reproduced. The speaker 931 outputs a sound for the navigation function or the content that is reproduced.

The radio communication interface 933 supports any cellular communication scheme (such as LTE and LTE-Advanced), and performs wireless communication. The radio communication interface 933 may typically include, for example, a BB processor 934 and an RF circuit 935. The BB processor 934 may perform, for example, encoding/decoding, modulating/demodulating and multiplexing/demultiplexing, and perform various types of signal processing for wireless communications. The RF circuit 935 may include, for example, a mixer, a filter and an amplifier, and transmits and receives wireless signals via the antenna 937. The radio communication interface 933 may also be a chip module having the BB processor 934 and the RF circuit 935 integrated thereon. The radio communication interface 933 may include multiple BB processors 934 and multiple RF circuits 935, as shown in Figure 29. Although Figure 29 shows the example in which the radio communication interface 933 includes the multiple BB processors 934 and the multiple RF circuits 935, the radio communication interface 933 may also include a single BB processor 934 or a single RF circuit 935.

Furthermore, in addition to a cellular communication scheme, the radio communication interface 933 may support another type of wireless communication scheme such as a short-distance wireless communication scheme, a near field communication scheme, and a wireless LAN scheme. In this case, the radio communication interface 933 may include the BB processor 934 and the RF circuit 935 for each wireless communication scheme.

Each of the antenna switches 936 switches connection destinations of the antennas 937 among multiple circuits (such as circuits for different wireless communication schemes) included in the radio communication interface 933.

Each of the antennas 937 includes a single or multiple antenna elements (such as multiple antenna elements included in an MIMO antenna), and is used for the radio communication interface 933 to transmit and receive wireless signals. As shown in Figure 29, the car navigation apparatus 920 may include the multiple antennas 937. Although Figure 29 shows the example in which the car navigation apparatus 920 includes the multiple antennas 937, the car navigation apparatus 920 may also include a single antenna 937.

Furthermore, the car navigation apparatus 920 may include the antenna 937 for each wireless communication scheme. In this case, the antenna switches 936 may be omitted from the configuration of the car navigation apparatus 920.

The battery 938 supplies power to blocks of the car navigation apparatus 920 shown in Figure 29 via feeder lines that are partially shown as dash lines in Figure 29. The battery 938 accumulates power supplied from the vehicle.

In the car navigation apparatus 920 as shown in Figure 29, the communication unit 201 of the electronic device 200 and the transceiver may be implemented by the radio communication interface 933. At least part of the functions may be implemented by the processor 921. For example, the processor 921 may provide user information thereof to the base station by executing the functions of the communication unit 201 and the learning unit 202, so that the base station determines a specific implementation of split learning in a manner that effectively protects privacy and data security.

The technology of the present disclosure may also be implemented as an in-vehicle system (or a vehicle) 940 including one or more blocks of the car navigation apparatus 920, the in-vehicle network 941 and a vehicle module 942. The vehicle module 942 generates vehicle data (such as a vehicle velocity, an engine velocity, and failure information), and outputs the generated data to the in-vehicle network 941.

The basic principle of the present disclosure has been described above in conjunction with particular embodiments. However, as can be appreciated by those ordinarily skilled in the art, all or any of the steps or components of the method and apparatus according to the disclosure can be implemented with hardware, firmware, software or a combination thereof in any computing device (including a processor, a storage medium, etc.) or a network of computing devices by those ordinarily skilled in the art in light of the disclosure of the disclosure and making use of their general circuit designing knowledge or general programming skills.

Moreover, the present disclosure further discloses a program product in which machine-readable instruction codes are stored. The aforementioned methods according to the embodiments can be implemented when the instruction codes are read and executed by a machine.

Accordingly, a memory medium for carrying the program product in which machine-readable instruction codes are stored is also covered in the present disclosure. The memory medium includes but is not limited to soft disc, optical disc, magnetic optical disc, memory card, memory stick and the like.

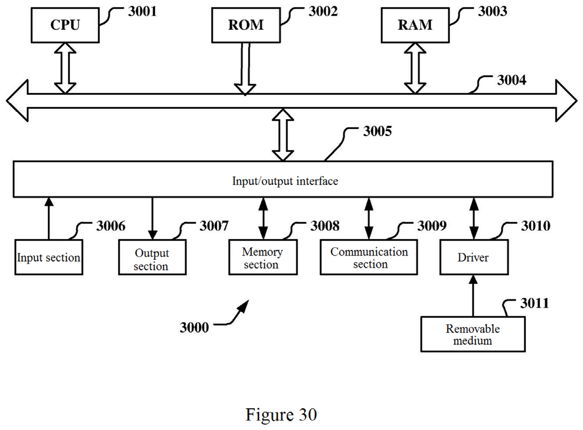

In the case where the present disclosure is realized with software or firmware, a program constituting the software is installed in a computer with a dedicated hardware structure (e.g. the general computer 3000 shown in Figure 30) from a storage medium or network, wherein the computer is capable of implementing various functions when installed with various programs.

In Figure 30, a central processing unit (CPU) 3001 executes various processing according to a program stored in a read-only memory (ROM) 3002 or a program loaded to a random access memory (RAM) 3003 from a memory section 3008. The data needed for the various processing of the CPU 3001 may be stored in the RAM 3003 as needed. The CPU 3001, the ROM 3002 and the RAM 3003 are linked with each other via a bus 3004. An input/output interface 3005 is also linked to the bus 3004.

The following components are linked to the input/output interface 3005: an input section 3006 (including keyboard, mouse and the like), an output section 3007 (including displays such as a cathode ray tube (CRT), a liquid crystal display (LCD), a loudspeaker and the like), a memory section 3008 (including hard disc and the like), and a communication section 3009 (including a network interface card such as a LAN card, modem and the like). The communication section 3009 performs communication processing via a network such as the Internet. A driver 3010 may also be linked to the input/output interface 3005, if needed. If needed, a removable medium 3011, for example, a magnetic disc, an optical disc, a magnetic optical disc, a semiconductor memory and the like, may be installed in the driver 3010, so that the computer program read therefrom is installed in the memory section 3008 as appropriate.

In the case where the foregoing series of processing is achieved through software, programs forming the software are installed from a network such as the Internet or a memory medium such as the removable medium 3011.

It should be appreciated by those skilled in the art that the memory medium is not limited to the removable medium 3011 shown in Figure 30, which has program stored therein and is distributed separately from the apparatus so as to provide the programs to users. The removable medium 3011 may be, for example, a magnetic disc (including floppy disc (registered trademark)), a compact disc (including compact disc read-only memory (CD-ROM) and digital versatile disc (DVD), a magneto optical disc (including mini disc (MD)(registered trademark)), and a semiconductor memory. Alternatively, the memory medium may be the hard discs included in ROM 3002 and the memory section 3008 in which programs are stored, and can be distributed to users along with the device in which they are incorporated.

To be further noted, in the apparatus, method and system according to the present disclosure, the respective components or steps can be decomposed and/or recombined. These decompositions and/or recombinations shall be regarded as equivalent solutions of the disclosure. Moreover, the above series of processing steps can naturally be performed temporally in the sequence as described above but will not be limited thereto, and some of the steps can be performed in parallel or independently from each other.

Finally, to be further noted, the term "include", "comprise" or any variant thereof is intended to encompass nonexclusive inclusion so that a process, method, article or device including a series of elements includes not only those elements but also other elements which have been not listed definitely or an element(s) inherent to the process, method, article or device. Moreover, the expression "comprising a(n) ......" in which an element is defined will not preclude presence of an additional identical element(s) in a process, method, article or device comprising the defined element(s)" unless further defined.

Although the embodiments of the present disclosure have been described above in detail in connection with the drawings, it shall be appreciated that the embodiments as described above are merely illustrative rather than limitative of the present disclosure. Those skilled in the art can make various modifications and variations to the above embodiments without departing from the spirit and scope of the present disclosure. Therefore, the scope of the present disclosure is defined merely by the appended claims and their equivalents.

**Claims**

1. An electronic device for split learning, comprising: processing circuitry configured to:

   determine, based on a channel state of a link between users which is related to a sidelink, one or more of the following: learning users participating in the split learning, a participation order for the learning users, and a communication link between each of the learning users and a downstream learning user thereof for client model transferring; and
   generate split information for the learning users based on the determining.

2. The electronic device according to claim 1, wherein the link between users which is related to the sidelink comprises one or more of a direct sidelink, a sidelink relay and a sidelink relay chain.

3. The electronic device according to claim 1, wherein the processing circuitry is configured to perform the determining further based on other user information.

4. The electronic device according to claim 3, wherein the other user information comprises one or more of the following: amount of data, calculating capability, amount of electricity, storage capability, transmission power, a channel state of an uplink and a downlink between the user and a base station, location information and user consent information, of the user.

5. The electronic device according to claim 4, wherein the user consent information comprises one or more of the following: a trust level of the user for other users, and whether the user agrees to perform the client model transferring through the uplink and downlink between the user and the base station.

6. The electronic device according to claim 5, wherein the trust level of the user for the other users comprises to which of the other users the user agrees to transmit a client model of the user itself.

7. The electronic device according to claim 6, wherein the trust level of the user for other users further comprises one or more of the following: to which of the other users the user agrees to transmit the client model of the user itself through the uplink and downlink; to which of the other users the user agrees to transmit the client model of the user itself through which sidelink relays; and to which of the other users the user agrees to transmit the client model of the user itself through which sidelink relay chains.

8. The electronic device according to claim 2, wherein the processing circuitry is configured to perform the determining based on one or more of the following principles:

   it is necessary or preferential to perform the client model transferring through a direct sidelink;
   it is necessary or preferential to avoid performing the client model transferring through an uplink and downlink between the user and a base station;
   minimizing a total sum of time for the client model transferring throughout the whole procedure of the split learning; and
   minimizing an overall probability of breaking off of a link for the client model transferring throughout the whole procedure of the split learning.

9. The electronic device according to claim 3, wherein the processing circuitry is further configured to acquire, from the user, the other user information and a channel state of a link which is related to the sidelink between the user and another user.

10. The electronic device according to claim 1, wherein the channel state comprises whether there is the link which is related to the sidelink and a link quality of the link which is related to the sidelink.

11. The electronic device according to claim 2, wherein for each of the learning users, the split information comprises one or more of the following: a model split point or a corresponding client model, an upstream learning user and/or a downstream learning user of the learning user, configuration of a communication link for the client model transferring, and link resources allocated by a base station.

12. The electronic device according to claim 11, wherein the configuration of the communication link for the client model transferring comprises: which one of the direct sidelink, the sidelink relay, the sidelink relay chain and the uplink and downlink between the user and a base station is adopted, wherein, in a case of adopting one of the sidelink relay and the sidelink relay chain, the configuration further comprises information on the used relay or relay chain.

13. The electronic device according to claim 11, wherein the processing circuitry is further configured to transmit the split information for each of the learning users to the learning user.

14. An electronic device for split learning, comprising: processing circuitry configured to:

   receive split information for split learning from a base station, wherein the split information is generated by the base station based on the following determining: the base station determines, based on a channel state of a link between users which is related to a sidelink, one or more of learning users participating in the split learning, a participation order for the learning users, and a communication link between each of the learning users and a downstream learning user thereof for client model transferring; and perform the split learning based on the split information.

15. The electronic device according to claim 14, wherein the link between users which is related to the sidelink comprises one or more of a direct sidelink, a sidelink relay and a sidelink relay chain.

16. The electronic device according to claim 15, wherein the split information comprises one or more of the following: a model split point or a corresponding client model, an upstream learning user and/or a downstream learning user of the present learning user, configuration of a communication link for the client model transferring, and link resources allocated by the base station.

17. The electronic device according to claim 16, wherein the configuration of the communication link for the client model transferring comprises: which one of the direct sidelink, the sidelink relay, the sidelink relay chain and the uplink and downlink between the user and the base station is adopted,
wherein, in a case of adopting one of the sidelink relay and the sidelink relay chain, the configuration further comprises information on the used relay or relay chain.

18. The electronic device according to claim 14, wherein the processing circuitry is further configured to transmit user information of a user corresponding to the electronic device to the base station, wherein the user information comprises a channel state of a link which is related to the sidelink between the user and another user.

19. The electronic device according to claim 18, wherein the user information further comprises other user information comprising one or more of the following: amount of data, calculating capability, amount of electricity, storage capability, transmission power, a channel state of an uplink and a downlink between the user and the base station, location information and user consent information, of the user,
wherein the base station performs the determining further based on the other user information.

20. The electronic device according to claim 19, wherein the user consent information comprises one or more of the following: a trust level of the user for other users, and whether the user agrees to perform the client model transferring through the uplink and downlink between the user and the base station.

21. The electronic device according to claim 20, wherein the trust level of the user for the other users comprises to which of the other users the user agrees to transmit a client model of the user itself.

22. The electronic device according to claim 21, wherein the trust level of the user for other users further comprises one or more of the following: to which of the other users the user agrees to transmit the client model of the user itself through the uplink and downlink; to which of the other users the user agrees to transmit the client model of the user itself through which sidelink relays; and to which of the other users the user agrees to transmit the client model of the user itself through which sidelink relay chains.

23. The electronic device according to claim 14, wherein the processing circuitry is configured to receive a client model of an upstream learning user from the upstream learning user based on the split information, and transmit the client model of the present learning user to the downstream learning user through the communication link for the client model transferring indicated in the split information.

24. The electronic device according to claim 14, wherein the channel state comprises whether there is the link which is related to the sidelink and a link quality of the link which is related to the sidelink.

25. A method for split learning, comprising:

determining, based on a channel state of a link between users which is related to a sidelink, one or more of the following: learning users participating in the split learning, a participation order for the learning users, and a communication link between each of the learning users and a downstream learning user thereof for client model transferring; and
generating split information for the learning users based on the determining.

26. A method for split learning, comprising:

receiving split information for split learning from a base station, wherein the split information is generated by the base station based on the following determining: the base station determines, based on a channel state of a link between users which is related to a sidelink, one or more of learning users participating in the split learning, a participation order for the learning users, and a communication link between each of the learning users and a downstream learning user thereof for client model transferring; and performing the split learning based on the split information.

27. An electronic device for model split of a neural network model, comprising:
   processing circuitry configured to:

   determine a current path for the model split based on a calculating state and a communication state of entities, wherein the current path comprises: a split point of the neural network model, split entities which participate in the model split to execute a part of respective parts of the neural network model corresponding to the split point, and a participation order of the split entities; and
   determine, when path switching is to be performed, a target path as a path to which the model split is to be switched, such that the model transferring between the current path and the target path is preferentially carried out through a sidelink.

28. The electronic device according to claim 27, wherein the processing circuitry is further configured to transmit at least a part of information of the determined current path to a corresponding split entity.

29. The electronic device according to claim 28, wherein the processing circuitry is configured to transmit, to a split entity, a portion of the neural network model or a split point corresponding to the split entity.

30. The electronic device according to claim 27, wherein when the path switching is to be performed, in a case of the split point being given, the processing circuitry is configured to preferentially determine a target path in which model transferring can be performed between a new split entity corresponding to an existing split entity in the current path and an existing split entity replaced by the new split entity through the sidelink.

31. The electronic device according to claim 27, wherein when the path switching is to be performed, in a case of the split point being not given, the processing circuitry is further configured to preferentially determine a target path in which the model transferring can be performed between a new split entity corresponding to an existing split entity in the current path and an existing split entity replaced by the new split entity through the side link, and the new split entity and the existing split entity correspond to the same split point.

32. The electronic device of claim 27, wherein the processing circuitry is further configured to:

   determine, when the path switching is to be performed, candidate paths which are possible switching targets and determining the target path from among the candidate paths; or
   determine the current path and the candidate paths, and determine the target path from among the candidate paths when the path switching is to be performed.

33. The electronic device according to claim 27, wherein the processing circuitry is further configured to determine a new split entity which is to replace one or more existing split entities in the current path when the path switching is to be performed, so as to form the target path based on the current path and the new split entity.

34. The electronic device according to claim 27, wherein the processing circuitry is further configured to receive, from a split entity, an indication message indicating that the path switching is to be performed.

35. The electronic device according to claim 34, wherein the indication message is transmitted by the split entity when it is determined that the split entity is no longer suitable for performing the model split.

36. The electronic device according to claim 27, wherein the model split comprises a training stage and/or an inference stage.

37. The electronic device according to claim 27, wherein the electronic device is arranged on at least one of the following: a core network side, a base station, an edge server and a cloud server.

38. The electronic device according to claim 27, wherein the split entities comprise a source entity and a subsequent split entity, wherein the source entity has data for training or inference and executes a first part of the split neural network model, and the split entity is one of the following: user equipment, a mobile base station, an edge server and a cloud server.

39. A method for model split of a neural network model, comprising:

   determining a current path for the model split based on a calculating state and a communication state of entities, wherein the current path comprises: a split point of the neural network model, split entities which participates in the model split to execute a part of respective parts of the neural network model corresponding to the split point, and a participation order of the split entities; and

determining, when path switching is to be performed, a target path as a path to which the model split is to be switched, such that the model transferring between the current path and the target path is preferentially carried out through a sidelink.

40. A computer readable storage medium having computer executable instructions stored thereon, which when executed by a processor, cause the processor to perform the method according to any one of claims 25, 26 and 39.

Label

Server

Client

Input data

Figure 1

Server

Backward
propagation

Intermediate data

Client 1          Client 2          Client 3

Figure 2

Figure 3A

Figure 3B

Figure 4

Figure 5

Figure 6

Execution order of split learning: UE#1 →2 → 3 → 4 → 8 →9 →10

Figure 7

Execution order of split learning:  UE#3 →2 → 1 → 10 → 9 →8 →4

Figure 8

Execution order of split learning:  UE#1 →2 → 3 → 8 →9 →10

Figure 9

Execution order of split learning: **UE#1 →2 → 3 → 8 →9 →10**

Figure 10

Execution order of split learning: **UE#1 →2 → 3 → 4 → 8 →9 →10**

Figure 11

Execution order of split learning: UE#1 →2 → 3 → 5 → 8 →9 →10

Figure 12

Figure 13

End device division
(Partial AI/ML operation/model)

End device division 1
(Partial AI/ML operation/model)

End device division 2
(Partial AI/ML operation/model)

Intermediate data

Intermediate data

Tree

End device

Network AI/ML endpoint 1

Network AI/ML endpoint 2

Figure 14

300

Determination unit
301

Switching unit
302

Figure 15

Path 1
Path 2

Entity 4

Entity 1

Entity 2

Entity 3

Split point 1    Split point 2

Figure 16

Figure 17

Figure 18

Figure 19

Figure 20

Figure 21

Figure 22

```
                        ┌──────────┐
                        │  Start   │
                        └──────────┘
                             │
                             ▼
        ┌─ ─ ─ ─ ─ ─ ─ ─ ─ ─ ─ ─ ─ ─ ─ ─┐
        │  Transmitting user information  │ ⌇─ S21
        │        to base station          │
        └─ ─ ─ ─ ─ ─ ─ ─ ─ ─ ─ ─ ─ ─ ─ ─┘
                             │
                             ▼
        ┌────────────────────────────────┐
        │     Receiving split information │ ⌇─ S22
        └────────────────────────────────┘
                             │
                             ▼
        ┌─ ─ ─ ─ ─ ─ ─ ─ ─ ─ ─ ─ ─ ─ ─ ─┐
        │   Receiving a client model of an│ ⌇─ S23
        │        upstream learning user   │
        └─ ─ ─ ─ ─ ─ ─ ─ ─ ─ ─ ─ ─ ─ ─ ─┘
                             │
                             ▼
        ┌────────────────────────────────┐
        │  Performing split learning based│ ⌇─ S24
        │         on split information    │
        └────────────────────────────────┘
                             │
                             ▼
        ┌─ ─ ─ ─ ─ ─ ─ ─ ─ ─ ─ ─ ─ ─ ─ ─┐
        │  Transmitting a client model to a│ ⌇─ S25
        │       downstream learning user  │
        └─ ─ ─ ─ ─ ─ ─ ─ ─ ─ ─ ─ ─ ─ ─ ─┘
                             │
                             ▼
                        ┌──────────┐
                        │   End    │
                        └──────────┘
```

Figure 23

Start

Determining a current path for model split based on calculating state and communication state of entities — **S31**

Transmitting at least a part of information of determined current path to a corresponding split entity — **S32**

Receiving, from a split entity, an indication message indicating that path switching is to be performed — **S33**

Determining a target path — **S34**

End

Figure 24

700

Network interface — 704

705

706

Storage device — 703

Memory — 702

Processor — 701

Figure 25

Figure 26

Figure 27

EP 4 657 775 A1

Figure 28

Figure 29

Figure 30

## INTERNATIONAL SEARCH REPORT

| International application No. |
| --- |
| **PCT/CN2023/099329** |

**A.  CLASSIFICATION OF SUBJECT MATTER**

H04B17/309(2015.01)i

According to International Patent Classification (IPC) or to both national classification and IPC

**B.  FIELDS SEARCHED**

Minimum documentation searched (classification system followed by classification symbols)

IPC: H04B H04W

Documentation searched other than minimum documentation to the extent that such documents are included in the fields searched

Electronic data base consulted during the international search (name of data base and, where practicable, search terms used)

CNTXT, CNKI, ENTXT, ENTXTC, IEEE: 侧链路, 侧行链路, 拆分, 拆分学习, 端到端, 分段, 分割, 分割实体, 分割学习, 分组, 基站, 客户端模型, 神经网络, 顺序, 学习顺序, 直通链路, 执行顺序, 终端, P2P, sidelink, side link, side-link, split learning, sequence, channel state

**C.  DOCUMENTS CONSIDERED TO BE RELEVANT**

| Category* | Citation of document, with indication, where appropriate, of the relevant passages | Relevant to claim No. |
| --- | --- | --- |
| A | CN 115577301 A (HUAZHONG UNIVERSITY OF SCIENCE AND TECHNOLOGY) 06 January 2023 (2023-01-06) description, paragraphs [0041]-[0097] | 1-40 |
| A | US 2022029971 A1 (TRIPLEBLIND, INC.) 27 January 2022 (2022-01-27) entire document | 1-40 |
| A | WO 2017038100 A1 (NEC CORP.) 09 March 2017 (2017-03-09) entire document | 1-40 |
| A | WO 2022073162 A1 (QUALCOMM INC. et al.) 14 April 2022 (2022-04-14) entire document | 1-40 |
| A | WO 2022167547 A1 (INTERDIGITAL CE PATENT HOLDINGS, SAS) 11 August 2022 (2022-08-11) entire document | 1-40 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 October 2023** | **23 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/099329**

| Patent document cited in search report | | | Publication date (day/month/year) | Patent family member(s) | | | Publication date (day/month/year) |
|---|---|---|---|---|---|---|---|
| CN | 115577301 | A | 06 January 2023 | None | | | |
| US | 2022029971 | A1 | 27 January 2022 | US | 11431688 | B2 | 30 August 2022 |
| | | | | US | 2022417225 | A1 | 29 December 2022 |
| WO | 2017038100 | A1 | 09 March 2017 | JPWO | 2017038100 | A1 | 30 August 2018 |
| | | | | JP | 6866846 | B2 | 28 April 2021 |
| | | | | US | 2019025801 | A1 | 24 January 2019 |
| | | | | US | 10671058 | B2 | 02 June 2020 |
| WO | 2022073162 | A1 | 14 April 2022 | None | | | |
| WO | 2022167547 | A1 | 11 August 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310116586